(19) **Europäisches Patentamt**
**European Patent Office**
**Office européen des brevets**

(11) **EP 3 764 227 A1**

(12) **EUROPEAN PATENT APPLICATION**

(43) Date of publication:
**13.01.2021 Bulletin 2021/02**

(21) Application number: **20181178.3**

(22) Date of filing: **19.06.2020**

(51) Int Cl.:
**G06F 9/455** (2018.01)   **G06F 9/451** (2018.01)
**G06F 9/50** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.07.2019   JP 2019129192**

(71) Applicant: **FUJITSU LIMITED**
**Kanagawa 211-8588 (JP)**

(72) Inventors:
• **TAKANO, Yosuke**
  **Kawasaki-shi, Kanagawa 211-8588 (JP)**
• **OGUCHI, Naoki**
  **Kawasaki-shi, Kanagawa 211-8588 (JP)**

(74) Representative: **Haseltine Lake Kempner LLP**
**138 Cheapside**
**London EC2V 6BJ (GB)**

(54) **INFORMATION PROCESSING APPARATUS, INFORMATION PROCESSING METHOD, AND PROGRAM**

(57)    An information processing apparatus includes a processor configured to: acquire a first traffic amount of communication performed between a user terminal and a virtual machine that operates in a first information processing apparatus or a second information processing apparatus and executes a processing according to an operation from the user terminal to respond with a result, the second information processing apparatus being accessible from the user terminal in a shorter response time than the first information processing apparatus; acquire a second traffic amount of communication performed between the virtual machine and a storage; and determine whether to cause the virtual machine to operate in the first information processing apparatus or the second information processing apparatus based on the first traffic amount and the second traffic amount.

FIG. 1

EP 3 764 227 A1

**Description**

FIELD

The embodiments discussed herein are related to an information processing apparatus, an information processing method, and a program.

BACKGROUND

In recent years, information leakage caused by loss or theft of a terminal in which personal data or confidential information is stored becomes a problem. As a security measure for preventing this, there is a virtual desktop infrastructure (VDI). In the VDI, a processing is executed on a virtual machine (VM: Virtual Machine) operating in a physical server, and a screen is transmitted to a user terminal. Here, data used for the processing is stored in a storage on a cloud, and the user terminal does not have to hold the data.

A plurality of physical servers capable of operating VMs may be present on a network. A place where the physical server is present may be referred to as a site, and a service provider using a VM may select a site on which each of the VMs is to be arranged. Further, through the migration of a VM on a physical server to another physical server, VMs arranged on each site may be re-arranged.

As for a VM arrangement technology, for example, a virtual machine operation monitoring system has been suggested, which presents information indicating a physical server on which all or a part of virtual machines may be arranged. Further, there has been also suggested an application arrangement system that extracts one or more application arrangement pattern candidates that has the smallest delay time, on the basis of delay information.

Related techniques are disclosed in, for example, Japanese Laid-Open Patent Publication No. 2013-196538 and Japanese Laid-Open Patent Publication No. 2017-143365.

A response is improved when a VM is arranged on a site where a round trip time (RTT) with a user terminal is the shortest (a site closest to the user terminal). However, since resources of a site are limited, it is difficult to arrange each of VMs on the site closest to the user terminals respectively connected to the VMs. For example, when an edge site is closest to a plurality of user terminals, VMs connected to the user terminals are respectively arranged on the edge site in an order of activation. Then, resources of the edge site are distributed on a first-come-first-served basis, and thus, a VM for which user operation is frequently performed may not be arranged on the edge site. Accordingly, the average of responses of all operating VMs may be degraded.

In one aspect, an object of the present disclosure is to improve an average response from a virtual machine to a user.

SUMMARY

According to an aspect of the embodiments, an information processing apparatus includes a processor configured to: acquire a first traffic amount of communication performed between a user terminal and a virtual machine that operates in a first information processing apparatus or a second information processing apparatus and executes a processing according to an operation from the user terminal to respond with a result, the second information processing apparatus being accessible from the user terminal in a shorter response time than the first information processing apparatus; acquire a second traffic amount of communication performed between the virtual machine and a storage; and determine whether to cause the virtual machine to operate in the first information processing apparatus or the second information processing apparatus based on the first traffic amount and the second traffic amount.

According to an aspect of the embodiments, it is possible to improve an average response from a virtual machine to a user.

BRIEF DESCRIPTION OF DRAWINGS

FIG. 1 is a view illustrating an example of an arrangement determination method of a virtual machine according to a first embodiment;
FIG. 2 is a view illustrating a system configuration example of a second embodiment;
FIG. 3 is a view illustrating one configuration example of hardware of an orchestrator;
FIG. 4 is a view illustrating an example of an arrangement site determination method;
FIG. 5 is a block diagram illustrating an example of the function included in a public site-side device in an information processing system;

FIG. 6 is a block diagram illustrating an example of the function included in an edge site-side device in the information processing system;

FIG. 7 is a view illustrating an example of VM information;

FIG. 8 is a view illustrating an example of a communication monitoring method of a VM;

FIG. 9 is a sequence diagram illustrating an example of monitoring of VM communication by a monitoring server;

FIG. 10 is a flowchart illustrating an example of an arrangement site determining procedure;

FIG. 11 is a sequence diagram illustrating an example of migration from a public site to an edge site;

FIG. 12 is a view illustrating a first arrangement example of a VM;

FIG. 13 is a view illustrating a system configuration example in which each edge site has a storage server;

FIG. 14 is a view illustrating the outline of a third embodiment;

FIG. 15 is a block diagram illustrating an example of the function included in an information processing system of the third embodiment;

FIG. 16 is a view illustrating an example of site information;

FIG. 17 is a view illustrating an example of an arrangement site determination method of the third embodiment;

FIG. 18 is a flowchart illustrating an example of an arrangement site determining procedure of the third embodiment;

FIG. 19 is a view illustrating a second arrangement example of a VM;

FIG. 20 is a view illustrating the outline of a fourth embodiment;

FIG. 21 is a flowchart illustrating an example of an arrangement site determining procedure of the fourth embodiment;

FIG. 22 is a view illustrating a third arrangement example of a VM;

FIG. 23 is a view illustrating a fourth arrangement example of a VM; and

FIG. 24 is a view illustrating a fifth arrangement example of a VM.

DESCRIPTION OF EMBODIMENTS

Hereinafter, embodiments of the present disclosure will be described with reference to the drawings. In addition, each embodiment may be carried out by combining a plurality of embodiments within a consistent range.

[First Embodiment]

First, a first embodiment will be described. The first embodiment is an information processing system that improves an average response from a virtual machine to a user.

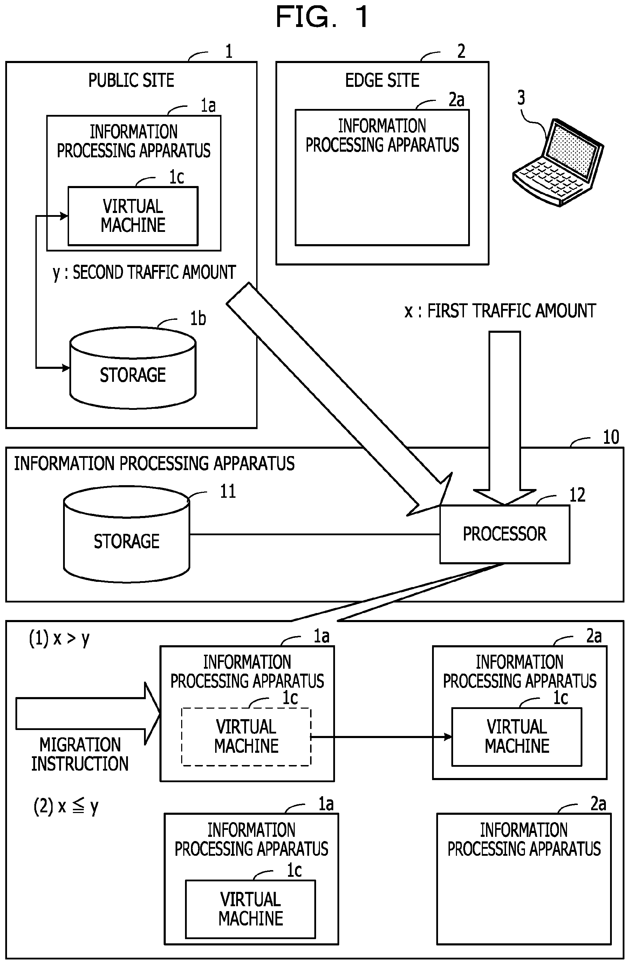

FIG. 1 is a view illustrating an example of an arrangement determination method of a virtual machine according to the first embodiment. FIG. 1 illustrates an example in a case where an information processing apparatus 10 carries out a virtual machine arrangement determination method of determining where a virtual machine operated by a user terminal 3 is to be arranged among information processing apparatus of a public site 1 or an edge site 2.

The public site 1 is a site such as, for example, a data center, where an information processing apparatus may be arranged. On the public site 1, an information processing apparatus 1a and a storage 1b are arranged. The information processing apparatus 1a provides a service such as, for example, VDI, to the user terminal 3 by operating a virtual machine 1c. The virtual machine 1c receives operation contents from the user terminal 3, and transmits a screen indicating an operation result to the user terminal 3. In addition, the virtual machine 1c may transmit/receive data to/from the storage 1b according to the operation contents. The storage 1b stores user data used by the virtual machine 1c.

The edge site 2 is a site such as, for example, a data center, where an information processing apparatus may be arranged. The edge site 2 is provided at, for example, a place geographically closer to the user terminal 3 than the public site 1. An information processing apparatus 2a is arranged on the edge site 2. Since the edge site 2 is closer to the user terminal 3 than the public site 1, the information processing apparatus 2a arranged on the edge site 2 is accessible from the user terminal 3 in a shorter response time than the information processing apparatus 1a arranged on the public site 1.

The information processing apparatus 2a provides a service such as, for example, the VDI to the user terminal 3 by operating the virtual machine 1c. For example, the virtual machine 1c executes a processing according to an operation from the user terminal 3, and responds with a result. The result as a response of the virtual machine 1c is, for example, screen information indicating a screen to be displayed on the user terminal 3. Even when operating in the information processing apparatus 2a, the virtual machine 1c performs the same processing as when operating in the information processing apparatus 1a. In addition, the virtual machine 1c operates in one of the information processing apparatuses 1a and 2a.

The user terminal 3 transmits operation contents to the virtual machine 1c on the basis of input from the user, and receives a screen that indicates an operation result from the virtual machine 1c. Then, the user terminal 3 displays a screen indicated by the received screen information. That is, the user may operate the virtual machine 1c via the user terminal 3.

The information processing apparatus 10 may carry out the virtual machine arrangement determination method by executing, for example, a virtual machine arrangement determination program in which a processing procedure of the virtual machine arrangement determination method is described. The information processing apparatus 10 includes a storage 11 and a processor 12. The storage 11 is, for example, a memory or a storage device included in the information processing apparatus 10. The processor 12 is, for example, a processor or an arithmetic circuit included in the information processing apparatus 10.

The storage 11 stores a first traffic amount of communication between the virtual machine 1c operating in the information processing apparatus 1a or the information processing apparatus 2a, and the user terminal 3, and a second traffic amount of communication between the virtual machine 1c and the storage 1b. For example, the first traffic amount is the number of packets per unit time exchanged between the virtual machine 1c and the user terminal 3, and the second traffic amount is the number of packets per unit time exchanged between the virtual machine 1c and the storage 1b. In addition, instead of the number of packets per unit time, the first traffic amount and the second traffic amount may be the number of accesses per unit time or the data amount per unit time.

The processor 12 acquires the first traffic amount between the virtual machine 1c operating in the information processing apparatus 1a or the information processing apparatus 2a and the user terminal 3, and the second traffic amount between the virtual machine 1c and the storage 1b. Then, the processor 12 stores the acquired first traffic amount and second traffic amount, in the storage 11.

The processor 12 determines whether to cause the virtual machine 1c to operate in the information processing apparatus 1a of the public site 1 or in the information processing apparatus 2a of the edge site 2, on the basis of the first traffic amount and the second traffic amount. For example, when a ratio of the second traffic amount to the first traffic amount is less than a predetermined value (threshold value), the processor 12 determines that the virtual machine 1c is to be operated in the information processing apparatus 2a of the edge site 2. In addition, when a ratio of the second traffic amount to the first traffic amount exceeds the predetermined value, the processor 12 determines that the virtual machine 1c is to be operated in the information processing apparatus 1a of the public site 1.

In addition, when a difference between the first traffic amount and the second traffic amount is equal to or larger than a predetermined value, the processor 12 may determine that the virtual machine 1c is to be operated in the information processing apparatus 2a of the edge site 2. Likewise, when a difference between the first traffic amount and the second traffic amount is less than the predetermined value, the processor 12 may determine that the virtual machine 1c is to be operated in the information processing apparatus 1a of the public site 1.

When a site determined to be a site where the virtual machine 1c is to be arranged is different from a site where the virtual machine 1c is operating, the processor 12 may instruct the information processing apparatuses 1a and 2a to perform a migration. For example, while the virtual machine 1c is operating in the information processing apparatus 1a of the public site 1, when it is determined that the virtual machine 1c is to operate in the information processing apparatus 2a of the edge site 2, the processor 12 migrates the virtual machine 1c to the information processing apparatus 2a of the edge site 2. In addition, while the virtual machine 1c is operating in the information processing apparatus 2a of the edge site 2, when it is determined that the virtual machine 1c is to operate in the information processing apparatus 1a of the public site 1, the processor 12 migrates the virtual machine 1c to the information processing apparatus 1a of the public site 1. For example, the processor 12 may perform a migration of the virtual machine 1c by transmitting a migration instruction of a virtual machine to the information processing apparatus 1a of the public site 1 or the information processing apparatus 2a of the edge site 2.

Hereinafter, as an example, descriptions will be made on arrangement determination of the virtual machine 1c operating in the information processing apparatus 1a. The first traffic amount between the virtual machine 1c operating in the information processing apparatus 1a and the user terminal 3 is x. Further, the second traffic amount between the virtual machine 1c operating in the information processing apparatus 1a and the storage 1b is y. When the first traffic amount is larger than the second traffic amount (x>y) (a ratio of the second traffic amount to the first traffic amount is less than "1"), the processor 12 determines that the virtual machine 1c is to be arranged on the edge site 2. In addition, when the first traffic amount is equal to or smaller than the second traffic amount (x≤y) (a ratio of the second traffic amount to the first traffic amount is equal to or larger than "1"), the processor 12 determines that the virtual machine 1c is to be operated on the information processing apparatus 1a of the public site 1.

When it is determined that the virtual machine 1c is to be operated on the information processing apparatus 2a of the edge site 2, the processor 12 instructs the information processing apparatuses 1a and 2a to perform a migration. Then, the information processing apparatuses 1a and 2a migrate the virtual machine 1c from the information processing apparatus 1a to the information processing apparatus 2a. Then, thereafter, the virtual machine 1c operating in the information processing apparatus 2a is operated by the user terminal 3. Further, the virtual machine 1c operating in the information processing apparatus 2a transmits/receives data to/from the storage 1b according to operation contents. Meanwhile, while the virtual machine 1c is operating in the information processing apparatus 1a of the public site 1, when it is determined that the virtual machine 1c is to be operated in the information processing apparatus 1a, the processor 12 does not perform any specific processing.

According to such an information processing apparatus 10, when the first traffic amount between the virtual machine 1c and the user terminal 3 is larger than the second traffic amount between the virtual machine 1c and the storage 1b, the virtual machine 1c operates in the information processing apparatus 2a of the edge site 2. Meanwhile, when the second traffic amount between the virtual machine 1c and the storage 1b is larger than the first traffic amount between the virtual machine 1c and the user terminal 3, the virtual machine 1c operates in the information processing apparatus 1a of the public site 1.

Here, when the virtual machine 1c is operating in the information processing apparatus 2a of the edge site 2, a response time from the virtual machine 1c to the user terminal 3 is relatively short, as compared to the case where the virtual machine 1c is operating in the information processing apparatus 1a of the public site 1. In this case, a time of access to the storage 1b by the virtual machine 1c becomes relatively longer. When the virtual machine 1c in which the second traffic amount for the storage 1b is smaller than the first traffic amount for the user terminal 3 is arranged on the edge site 2, since a frequency of waiting for access to the storage 1b is relatively small, the degree of response improvement is relatively high. Meanwhile, even when the virtual machine 1c in which the second traffic amount for the storage 1b is larger than the first traffic amount for the user terminal 3 is arranged on the edge site 2, since a frequency of waiting for access to the storage 1b is relatively large, the degree of response improvement is relatively low.

Therefore, according to the information processing apparatus 10, the virtual machine 1c whose degree of response improvement is relatively high due to operation in the information processing apparatus 2a of the edge site 2 is arranged on the edge site 2. Meanwhile, the virtual machine 1c whose degree of response improvement is relatively low due to operation in the information processing apparatus 2a of the edge site 2 is arranged on the public site 1. As a result, resources of the edge site 2 are effectively utilized. For example, the information processing apparatus 2a may operate another virtual machine whose degree of response improvement is relatively high due to arrangement on the edge site 2, instead of the virtual machine 1c whose degree of response improvement is relatively low due to arrangement on the edge site 2. Accordingly, when there is a plurality of virtual machines arranged on the public site 1 or the edge site 2, an average of responses from the virtual machines to the users is improved.

When there is a plurality of virtual machines, for example, the processor 12 acquires first traffic amount and second traffic amount, and calculates a ratio of the second traffic amount to the first traffic amount, for each of the virtual machines 1c corresponding to a plurality of user terminals 3. Then, the processor 12 determines the virtual machine 1c to be operated in the information processing apparatus 2a by comparing the respective ratios of the virtual machines 1c. Accordingly, among the virtual machines 1c, the virtual machine 1c in which an improvement effect of response to the user is relatively high due to operation in the information processing apparatus 2a may be operated in the information processing apparatus 2a of the edge site 2. As a result, an average of responses from the virtual machines to the users is improved.

In addition, when comparing the respective ratios of the virtual machines 1c, the processor 12 defines, for example, a boundary line that divides a plane of a coordinate system having a first axis indicating first traffic amount and a second axis indicating second traffic amount, into a first area where the ratio is less than a predetermined value and a second area where the ratio is equal to or larger than the predetermined value. Then, the processor 12 sets a point corresponding to a pair of the first traffic amount and the second traffic amount, on the plane, for each of candidate virtual machines in which the ratios are less than the predetermined value. Then, the processor 12 determines a candidate virtual machine to be operated in the information processing apparatus 2a on the basis of a distance between the set point and the boundary line. For example, the processor 12 causes the virtual machine 1c corresponding to a point farther from the boundary line to operate preferentially in the information processing apparatus 2a. Accordingly, it is possible to properly determine the virtual machine 1c where an improvement effect of response to the user is relatively high due to the operation in the information processing apparatus 2a.

In addition, the processor 12 may cause as many virtual machines 1c as possible to operate in the information processing apparatus 2a of the edge site 2. In this case, the processor 12 determines a priority order of operation in the information processing apparatus 2a on the basis of the ratio, for each of the virtual machines 1c. Then, the processor 12 determines that a predetermined number of virtual machines 1c are to be operated in a descending order of priority in the information processing apparatus 2a. Here, the predetermined number is, for example, an upper limit value of the number of virtual machines that may be operated in the information processing apparatus 2a. After determining the priority order, the processor 12 determines that the virtual machines 1c not included in the predetermined number in a descending order of priority are to be operated in the information processing apparatus 1a. Accordingly, it is possible to increase the operation efficiency of the information processing apparatus 2a provided near the user terminal 3, thereby improving an average of responses from the virtual machines to the users.

[Second Embodiment]

Next, a second embodiment will be described. In the second embodiment, the arrangement of a VM providing a VDI service is determined.

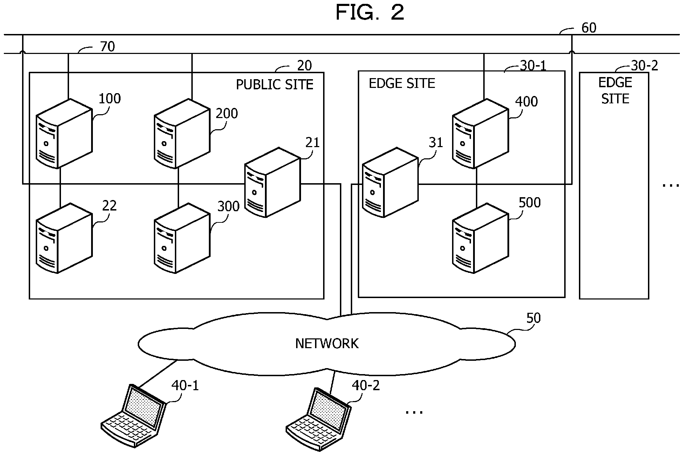

FIG. 2 is a view illustrating an example of a system configuration of the second embodiment. An internal network of a public site 20, internal networks of edge sites 30-1, 30-2,... and user terminals 40-1, 40-2,... are connected to a network 50. A gateway 21, a storage server 22, an orchestrator 100, a monitoring server 200, and a VDI server 300 are connected to the internal network of the public site 20. The gateway 21 connects the internal network of the public site 20 to the network 50. The storage server 22 stores data used by the user in the VDI service.

The orchestrator 100 determines a site where a VM providing a VDI service is to be arranged. The monitoring server 200 monitors a communication of the VDI server 300. The monitoring server 200 notifies the orchestrator 100 of the monitoring result of the VDI server 300 via a network 70 which is a network for transmitting the monitoring result. The VDI server 300 is a server capable of operating a VM providing a VDI service. For example, when a VM providing a VDI service to the user terminal 40-1 is operating in the VDI server 300, the VDI server 300 receives operation contents for the VM, from the user terminal 40-1 via the network 50. Further, the VDI server 300 accesses the storage server 22, and performs transmission/reception of data according to the operation contents from the user terminal 40-1.

The internal network of the public site 20 is connected to the internal networks of the edge sites 30-1, 30-2,... via a network 60.

The edge site 30-1 is a site where a time of access from the user terminal 40-1 is shortest (an edge site closest to the user terminal 40-1) among the public site 20, the edge sites 30-1, 30-2,.... A gateway 31, a monitoring server 400, and a VDI server 500 are connected to the internal network of the edge site 30-1. The gateway 31 connects the internal network of the edge site 30-1 to the network 50.

The monitoring server 400 monitors a communication of the VDI server 500. The monitoring server 400 notifies the orchestrator 100 of the monitoring result of the VDI server 500 via the network 70. The VDI server 500 is a server capable of operating a VM providing a VDI service. For example, when a VM providing a VDI service to the user terminal 40-1 is operating in the VDI server 500, the VDI server 500 receives operation contents for the VM, from the user terminal 40-1 via the network 50. Further, the VDI server 500 accesses the storage server 22, and performs transmission/reception of data according to the operation contents from the user terminal 40-1. In addition, the edge sites 30-2,... also have the same configurations as the edge site 30-1.

The user terminals 40-1, 40-2,... are terminals operated by the users receiving VDI services. The VMs providing the VDI services to the user terminals 40-1, 40-2, ... operate in VDI servers of the public site 20 or the respective edge sites closest to the user terminals 40-1, 40-2,.... The users operate the VMs by accessing the VDI servers via the user terminals 40-1, 40-2,....

With the system configuration, VDI services are provided to the user terminals 40-1, 40-2,.... The orchestrator 100 periodically determines a site where a VM is to be arranged, on the basis of the monitoring result of each VDI server. When the orchestrator 100 determines to arrange a certain VM on a site different from the active site, the orchestrator 100 instructs a VDI server operating the corresponding VM, to perform live migration. Then, the VDI server operating the VM performs live migration of the VM to a VDI server of a site as a destination, via the network 60. In this manner, the VM providing the VDI service may be periodically migrated between sites.

Hereinafter, descriptions will be made on an arrangement site determination method of a VM providing a VDI service to the user terminal 40-1. The arrangement site determination processing is similarly performed for other VMs.

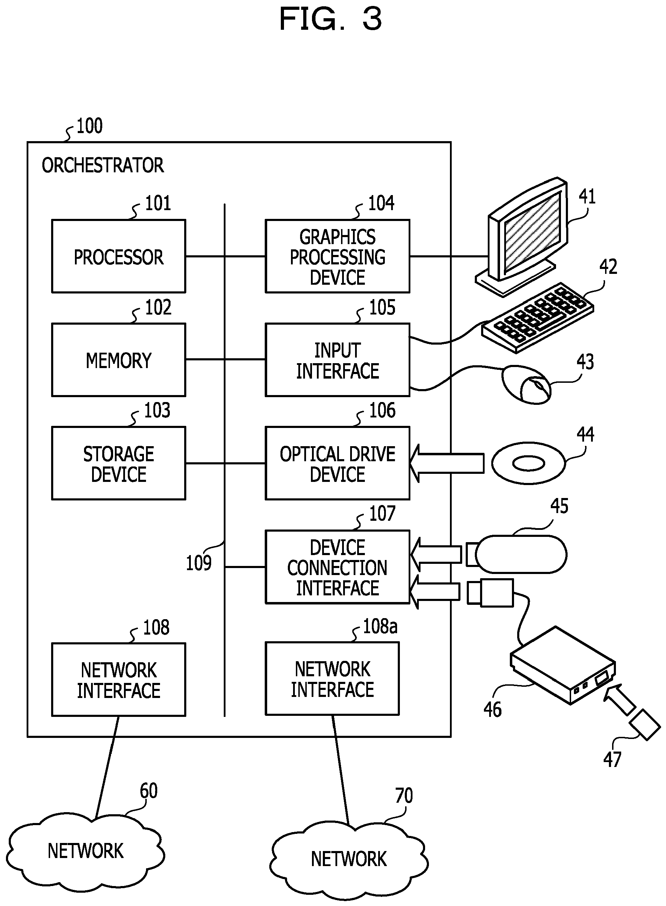

FIG. 3 is a view illustrating an example of a hardware configuration of an orchestrator. In the orchestrator 100, the entire device is controlled by a processor 101. The processor 101 is connected to a memory 102 and a plurality of peripheral devices via a bus 109. The processor 101 may be a multiprocessor. The processor 101 is, for example, a central processing unit (CPU), a micro processing unit (MPU), or a digital signal processor (DSP). At least a portion of functions implemented when the processor 101 executes a program may be implemented by an electronic circuit such as an application specific integrated circuit (ASIC), or a programmable logic device (PLD).

The memory 102 is used as a main storage device of the orchestrator 100. The memory 102 temporarily stores at least a portion of an OS program or an application program to be executed by the processor 101. Further, the memory 102 stores various data pieces used for the processing by the processor 101. As for the memory 102, for example, a volatile semiconductor storage device such as a random access memory (RAM) is used.

As for the peripheral devices connected to the bus 109, there are a storage device 103, a graphic processing device 104, an input interface 105, an optical drive device 106, a device connection interface 107, and network interfaces 108 and 108a.

The storage device 103 electrically or magnetically writes/reads data on/from a recording medium embedded therein. The storage device 103 is used as an auxiliary storage device of a computer. The storage device 103 stores an OS program, an application program, and various data pieces. In addition, as for the storage device 103, for example, a hard disk drive (HDD) or a solid state drive (SSD) may be used.

A monitor 41 is connected to the graphic processing device 104. The graphic processing device 104 displays images on a screen of the monitor 41 according to a command from the processor 101. As for the monitor 41, there is a display device using organic electro luminescence (EL), a liquid crystal display device, etc.

A keyboard 42 and a mouse 43 are connected to the input interface 105. The input interface 105 transmits a signal sent from the keyboard 42 or the mouse 43, to the processor 101. In addition, the mouse 43 is an example of a pointing device, and another pointing device may be used. As for another pointing device, there are a touch panel, a tablet, a touch pad, a trackball, etc.

The optical drive device 106 reads data recorded in an optical disc 44 by using laser light, etc. The optical disc 44 is a portable recording medium in which data is recorded in a light-reflection readable manner. As for the optical disc 44, there are a digital versatile disc (DVD), a DVD-RAM, a compact disc read only memory (CD-ROM), a CD-R(Recordable)/RW(ReWritable), etc.

The device connection interface 107 is a communication interface for connecting peripheral devices to the orchestrator 100. For example, a memory device 45 or a memory reader/writer 46 may be connected to the device connection interface 107. The memory device 45 is a recording medium provided with a function of communicating with the device connection interface 107. The memory reader/writer 46 is a device that writes data on a memory card 47, or reads data from the memory card 47. The memory card 47 is a card-type recording medium.

The network interface 108 is connected to the network 60. The network interface 108 transmits/receives data to/from another computer or a communication device via the network 60. The network interface 108a is connected to the network 70. The network interface 108a transmits/receives data to/from another computer or a communication device via the network 70.

The orchestrator 100 may implement the processing function of the second embodiment through the above hardware configuration. In addition, the user terminal 40-1, the monitoring servers 200 and 400, and the VDI servers 300 and 500 may also be implemented by the same hardware as the orchestrator 100. Further, the information processing apparatus 10 illustrated in the first embodiment may also be implemented by the same hardware as the orchestrator 100 illustrated in FIG. 3.

The orchestrator 100 implements the processing function of the second embodiment by executing, for example, a program recorded in a computer readable recording medium. The program in which processing contents to be executed by the orchestrator 100 are described may be recorded in various recording media. For example, the program to be executed by the orchestrator 100 may be stored in the storage device 103. The processor 101 loads at least a portion of the program within the storage device 103 into the memory 102, thereby executing the program. In addition, the program to be executed by the orchestrator 100 may be recorded in a portable recording medium such as the optical disc 44, the memory device 45, or the memory card 47. The program stored in the portable recording medium becomes executable after being installed in the storage device 103 under the control by, for example, the processor 101. In addition, the processor 101 may also directly read and execute the program from the portable recording medium.

Next, descriptions will be made on an arrangement site determination method of a VM.

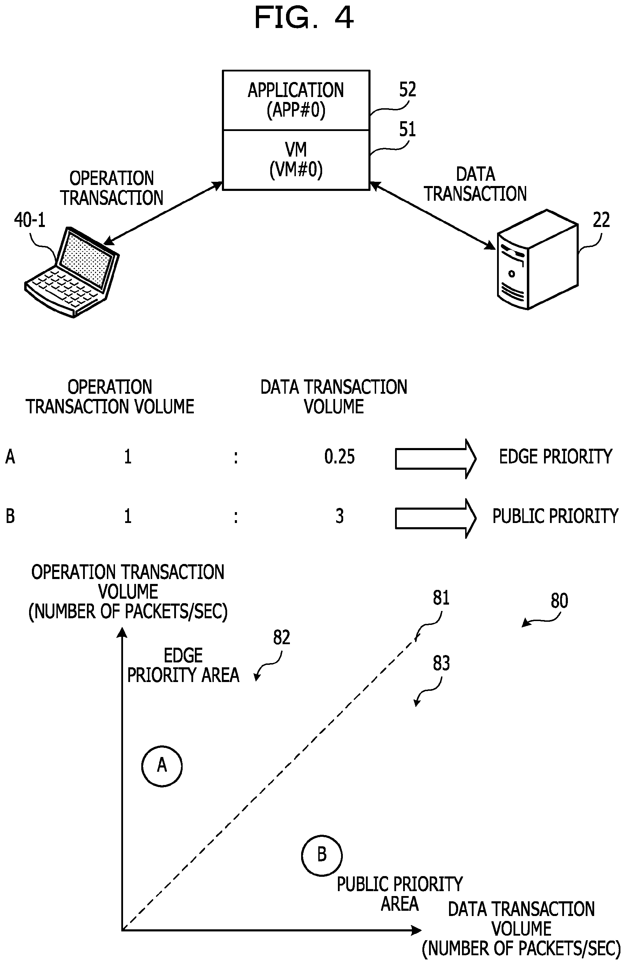

FIG. 4 is a view illustrating an example of an arrangement site determination method. A VM having a VM name of "VM#0" provides a VDI service to the user terminal 40-1. The arrangement site of "VM#0" is determined as follows on the basis of an amount of communication with the storage server 22 and an amount of communication with the user terminal 40-1.

A VM 51 (a VM name: "VM#0") is a VM that provides a VDI service to the user terminal 40-1. On the VM 51, an application 52 (an application name: "APP (Application)#0") is running. The application 52 is, for example, an application such as an editor, presentation material creation software, video playback software, or a browser.

The user terminal 40-1 transmits operation contents to the VM 51 to operate the application 52. The operation contents are signals input by, for example, a keyboard or a pointing device. Then, the VM 51 performs a processing according to the operation contents. The processing performed by the VM 51 may include reading or writing on data stored in the storage server 22. Then, the VM 51 transmits a screen indicating the processing result to the user terminal 40-1. The user terminal 40-1 displays a screen received from the VM 51.

Here, a time until the screen information that indicates the screen of the processing result is received after the user terminal 40-1 transmits the operation contents to the VM 51 may be referred to as a response time. When a communication time between the user terminal 40-1 and the VM 51 is shortened, the response time is improved. Meanwhile, when it takes a relatively long time for the VM 51 to perform reading or writing on data stored in the storage server 22, the response time is degraded. That is, when a frequency of a communication between the VM 51 and the storage server 22 is relatively high, even when a communication time between the user terminal 40-1 and the VM 51 is shortened, the degree of response time improvement is reduced. Therefore, the orchestrator 100 determines an arrangement site of the VM 51 according to the traffic amount (an operation transaction volume) between the user terminal 40-1 and the VM 51 and the traffic amount (a data transaction volume) between the storage server 22 and the VM 51.

The operation transaction volume is the number of packets per unit time (*e.g.,* 1 sec) exchanged between the user terminal 40-1 and the VM 51 during transmission/reception of operation contents and screens. The data transaction volume is the number of packets per unit time (*e.g.,* 1 sec) exchanged when the VM 51 performs reading or writing on the storage server 22. In addition, the operation transaction volume may be the number of times the user terminal 40-1 transmits operation contents, and the data transaction volume may be the number of accesses to the storage server 22. Further, the operation transaction volume may be a size of data per unit time exchanged during transmission/reception of operation contents and screens, and the data transaction volume may be a size of data per unit time exchanged during reading or writing on the storage server 22.

The orchestrator 100 determines an arrangement site of the VM 51 according to a position where a point indicating the VM 51 is present, on a graph 80 in which the vertical axis indicates the operation transaction volume, and the horizontal axis indicates the data transaction volume. On the graph 80, an area above a boundary line 81 that indicates operation transaction volume=data transaction volume (*i.e.,* operation transaction volume>data transaction volume) is an edge priority area 82. Meanwhile, an area ≤below the boundary line 81 (*i.e.,* operation transaction volume ≤ data transaction volume) is a public priority area 83. That is, when a ratio of the data transaction volume to the operation transaction volume is less than 1, the point indicating the VM 51 is located within the edge priority area 82. When a ratio of the data transaction volume to the operation transaction volume is equal to or larger than 1, the point indicating the VM 51 is located within the public priority area 83.

For example, when the VM 51 has 1:0.25 as operation transaction volume: data transaction volume, the point indicating the VM 51 is present in the edge priority area 82. Then, the orchestrator 100 determines that the arrangement site of the VM 51 is the edge site 30-1 which is an edge site closest to the user terminal 40-1. In addition, for example, when the VM 51 has 1:3 as operation transaction volume: data transaction volume, the point indicating the VM 51 is present in the public priority area 83. Then, the orchestrator 100 determines that the arrangement site of the VM 51 is the public site 20.

In this manner, the orchestrator 100 selects the edge site 30-1 as the arrangement site of the VM 51 when the degree of response time improvement is relatively high due to arrangement on the edge site 30-1, and selects the public site 20 when the degree of response time improvement is relatively low.

Next, descriptions will be made on the function of each information processing apparatus included in the information processing system, for determining arrangement of a virtual machine providing a VDI service.

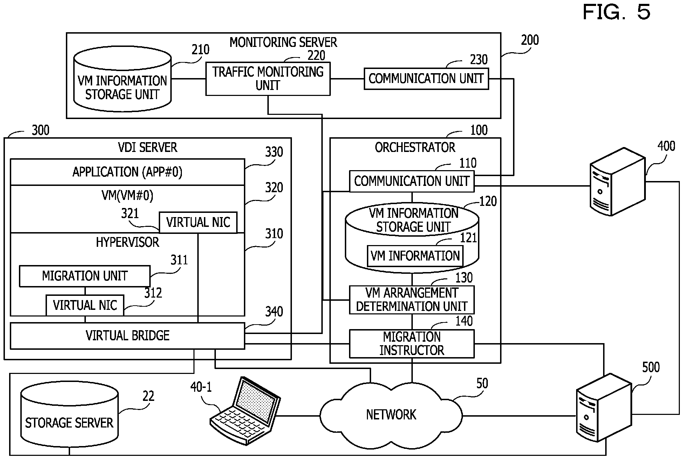

FIG. 5 is a block diagram illustrating an example of the function included in a public site-side device in the information processing system. FIG. 5 illustrates a situation where a VM 320 having a VM name of "VM#0" is operating in the VDI server 300 of the public site 20. Under this situation, the orchestrator 100 determines whether to arrange the VM 320 (the VM name of "VM#0") operating in the VDI server 300, in the VDI server 300 or in the VDI server 500 thereafter. The orchestrator 100 includes a communication unit 110, a VM information storage 120, a VM arrangement determination unit 130, and a migration instructor 140.

The communication unit 110 acquires the monitoring result of communication of a VM operating on each site from monitoring servers of the public site 20 and the edge sites 30-1, 30-2,.... The monitoring result of the VM communication includes an operation transaction volume and a data transaction volume. The communication unit 110 updates an operation transaction volume and a data transaction volume of each VM, which are stored in the VM information storage 120, on the basis of the monitoring result of the VM communication.

The VM information storage 120 stores VM information 121. The VM information 121 is information of a VM operating in the public site 20 or the edge sites 30-1, 30-2,.... The VM arrangement determination unit 130 determines whether to arrange the VM 320 having the VM name of "VM#0" in the VDI server 300 or in the VDI server 500, on the basis of an operation transaction volume and a data transaction volume of the VM 320 (the VM name of "VM#0"), which are included in the VM information 121. For example, the VM arrangement determination unit 130 determines to arrange the VM 320 (the VM name of "VM#0") in the VDI server 500 when the operation transaction volume of the VM 320 (the VM name of "VM#0") is larger than the data transaction volume of the VM name of "VM#0." Meanwhile, the VM arrangement determination unit 130 determines to arrange the VM 320 (the VM name of "VM#0") in the VDI server 300 when the operation transaction volume of the VM 320 (the VM name of "VM#0") is equal to or smaller than the data transaction volume of the VM name of "VM#0."

The migration instructor 140 instructs the VDI servers 300 and 500 to perform a migration on the basis of the arrangement site of the VM 320 (the VM name of "VM#0") determined by the VM arrangement determination unit 130. For example, under a situation where the VM 320 (the VM name of "VM#0") is operating in the VDI server 300, when it is determined that the VM 320 is to be arranged in the VDI server 500, the migration instructor 140 instructs the VDI servers 300 and 500 to perform a migration. Meanwhile, under a situation where the VM 320 (the VM name of "VM#0") is operating in the VDI server 300, when it is determined that the VM 320 is to be arranged in the VDI server 300, the migration instructor 140 does not perform any specific processing.

The monitoring server 200 includes a VM information storage 210, a traffic monitoring unit 220, and a communication unit 230. The VM information storage 210 stores information of a VM operating on the public site 20. The traffic monitoring unit 220 monitors an operation transaction volume and a data transaction volume of the VM 320 (the VM name of "VM#0") operating in the VDI server 300. Here, the traffic monitoring unit 220 determines which devices are in communication, on the basis of the respective Internet Protocol (IP) addresses of the storage server 22, the user terminal 40-1, and the VM 320 (the VM name of "VM#0"), which are stored in the VM information storage 210. The communication unit 230 transmits the result of the monitoring by the traffic monitoring unit 220 on the communication of the VM 320 (the VM name of "VM#0"), to the orchestrator 100.

The VDI server 300 includes a hypervisor 310, the VM 320 (the VM name of "VM#0"), an application 330 (an application name of "APP#0"), and a virtual bridge 340. The hypervisor 310 manages the VM 320. The hypervisor 310 may also manage VMs other than the VM 320. The VDI server 300 may include a host OS including virtualization software, instead of the hypervisor 310. The hypervisor 310 includes a migration unit 311 and a virtual network interface card (NIC) 312.

The migration unit 311 performs a migration of the VM 320 according to a migration instruction from the orchestrator 100. When a migration instruction is received from the orchestrator 100, the migration unit 311 transmits data of the VM 320 (the VM name of "VM#0") to the VDI server 500 via the virtual NIC 312 and the virtual bridge 340. The virtual NIC 312 is an NIC for connecting the hypervisor 310 to a network, which is reproduced by software. The virtual NIC 312 is connected to the virtual bridge 340.

The VM 320 is a VM operated by the user terminal 40-1 in a VDI service. The VM 320 acquires operation contents from the user terminal 40-1, via a virtual NIC 321 and the virtual bridge 340. The VM 320 operates the application 330 running on the VM 320, according to the operation contents from the user terminal 40-1. In addition, the VM 320 may access the storage server 22 according to the operation contents from the user terminal 40-1. Here, the VM 320 transmits/receives data to/from the storage server 22 via the virtual NIC 321 and the virtual bridge 340. The virtual NIC 321 is an NIC for connecting the VM 320 to a network, which is reproduced by software. The virtual NIC 321 is connected to the virtual bridge 340.

The application 330 is an application operating on the VM 320. The application 330 is, for example, an application such as an editor, presentation material creation software, video playback software, or a browser.

The virtual bridge 340 is a bridge for connecting the virtual NIC to a physical communication interface, which is reproduced by software. The virtual NICs 312 and 321 and the physical communication interface of the VDI server 300 are connected to the virtual bridge 340. Accordingly, the hypervisor 310 and the VM 320 may communicate with another device via the networks 50 and 60.

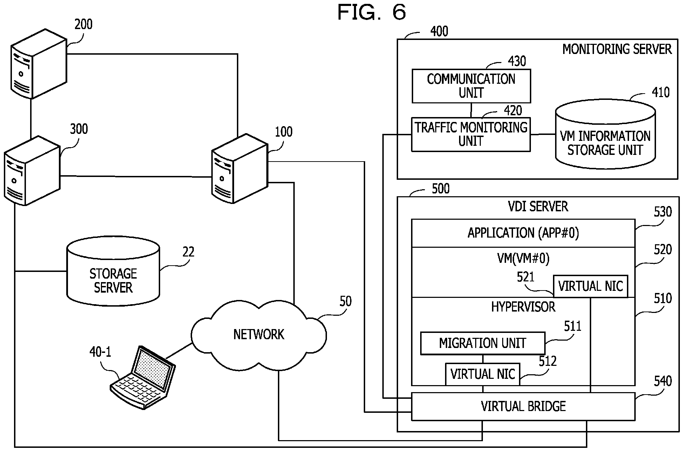

The monitoring server 400 transmits the monitoring result of the communication of a VM operating in the VDI server 500, to the orchestrator 100. The VDI server 500 may operate VMs other than the VM name of "VM#0." The VDI server 500 performs migration of "VM#0" according to a migration instruction from the orchestrator 100. When a migration instruction is received from the orchestrator 100, the VDI server 500 receives data of the VM name of "VM#0" from the VDI server 300. Then, the VDI server 500 performs setting such that the VM (the VM name of "VM#0") may be operated. Then, the configuration of the function of the information processing system enters into the state of FIG. 6 below.

FIG. 6 is a block diagram illustrating an example of the function included in an edge site-side device in the information processing system. FIG. 6 illustrates a situation where a VM 520 of "VM#0" is operating in the VDI server 500 of the edge site 30-1. Under this situation, the orchestrator 100 determines whether to arrange the VM 520 of "VM#0" operating in the VDI server 500, in the VDI server 300 or in the VDI server 500.

The orchestrator 100 has the function illustrated in FIG. 5. Meanwhile, the communication unit 110 acquires the monitoring result of the communication of the VM 520 (the VM name of "VM#0") operating in the VDI server 500, from the monitoring server 400. In addition, the migration instructor 140 instructs the VDI servers 300 and 500 to perform migration when it is determined that the VM 520 (the VM name of "VM#0") is to be arranged in the VDI server 300, and does not perform any specific processing when it is determined that the VM 520 (the VM name of "VM#0") is to be arranged in the VDI server 500.

The monitoring server 400 includes a VM information storage 410, a traffic monitoring unit 420, and a communication unit 430. The VM information storage 410 stores information of a VM operating on the edge site 30-1. The traffic monitoring unit 420 monitors an operation transaction volume and a data transaction volume of the VM name of "VM#0" operating in the VDI server 500. Here, the traffic monitoring unit 420 determines which devices are in communication, on the basis of the respective IP addresses of the storage server 22, the user terminal 40-1, and the VM 520 (the VM name of "VM#0"), which are stored in the VM information storage 410. The communication unit 430 transmits the result of the monitoring by the traffic monitoring unit 420 on the communication of the VM 520 (the VM name of "VM#0"), to the orchestrator 100.

The VDI server 500 includes a hypervisor 510, the VM 520 (the VM name of "VM#0"), an application 530 (the application name of "APP#0"), and a virtual bridge 540. The hypervisor 510 manages the VM 520. The hypervisor 510 may also manage VMs other than the VM 520. The VDI server 500 may include a host OS including virtualization software, instead of the hypervisor 510. The hypervisor 510 includes a migration unit 511 and a virtual NIC 512.

The migration unit 511 performs a migration of the VM 520 according to a migration instruction from the orchestrator 100. When a migration instruction is received from the orchestrator 100, the migration unit 511 transmits data of the VM 520 (the VM name of "VM#0") to the VDI server 300 via the virtual NIC 512 and the virtual bridge 540. The virtual NIC 512 is an NIC for connecting the hypervisor 510 to a network, which is reproduced by software. The virtual NIC 512 is connected to the virtual bridge 540.

The VM 520 is a VM operated by the user terminal 40-1 in a VDI service. The VM 520 acquires operation contents from the user terminal 40-1, via a virtual NIC 521 and the virtual bridge 540. The VM 520 operates the application 530 running on the VM 520, according to the operation contents from the user terminal 40-1. In addition, the VM 520 may access the storage server 22 according to the operation contents from the user terminal 40-1. Here, the VM 520 transmits/receives data to/from the storage server 22 via the virtual NIC 521 and the virtual bridge 540. The virtual NIC 521 is an NIC for connecting the VM 520 to a network, which is reproduced by software. The virtual NIC 521 is connected to the virtual bridge 540.

The application 530 is an application operating on the VM 520. The application 530 is, for example, an application such as an editor, presentation material creation software, video playback software, or a browser.

The virtual bridge 540 is a bridge for connecting the virtual NIC to a physical communication interface, which is reproduced by software. The virtual NICs 512 and 521 and the physical communication interface of the VDI server 500 are connected to the virtual bridge 540. Accordingly, the hypervisor 510 and the VM 520 may communicate with another device via the networks 50 and 60.

The monitoring server 200 transmits the monitoring result of the communication of a VM operating in the VDI server 300, to the orchestrator 100. The VDI server 300 may operate VMs other than the VM name of "VM#0." The VDI server 300 performs migration of the VM 520 (the VM name of "VM#0") according to a migration instruction from the orchestrator 100. When a migration instruction is received from the orchestrator 100, the VDI server 300 receives data of the VM 520 (the VM name of "VM#0") from the VDI server 500. Then, the VDI server 300 performs setting such that the VM 320 (the VM name of "VM#0") may be operated. Then, the configuration of the function of the information processing system enters into the state of FIG. 5.

Lines connecting elements illustrated in FIGs. 5 and 6 to each other illustrate a portion of a communication path, and communication paths other than the illustrated communication path may also be set. In addition, the function of each element illustrated in FIGs. 5 and 6 may be implemented by causing, for example, a computer to execute a program module corresponding to the element.

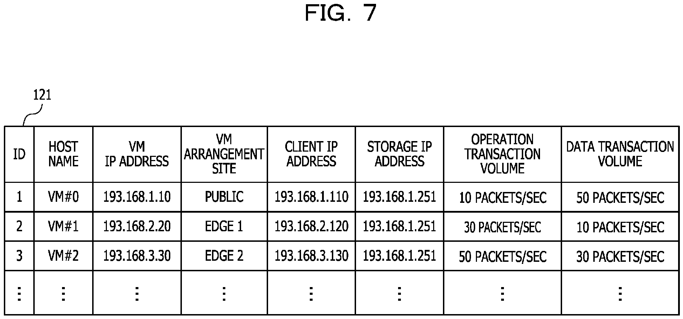

Next, information held by the orchestrator 100 will be described in detail with reference to FIG. 7.

FIG. 7 is a view illustrating an example of VM information. In the VM information 121, a record corresponding to each VM operating in the public site 20 or the edge sites 30-1, 30-2,... is registered. The record of each VM includes an identifier (ID), a host name, a VM IP address, a VM arrangement site, a client IP address, a storage IP address, an operation transaction volume, and a data transaction volume.

The ID is an identification number of each VM. The host name is a VM name of each VM. The VM IP address is an IP address of each VM. The VM arrangement site is a site where each VM is currently arranged. The client IP address is an IP address of a client to which each VM provides a VDI service. For example, a client IP address corresponding to the VM name of "VM#0" is an IP address of the user terminal 40-1. The storage IP address is an IP address of a storage where data used by each VM in a VDI service is stored. For example, a storage IP address corresponding to the VM name of "VM#0" is an IP address of the storage server 22. The operation transaction volume is an operation transaction volume of each VM. The data transaction volume is a data transaction volume of each VM.

In addition, the VM information storages 210 and 410 of the monitoring servers 200 and 400 also store the same data as the VM information 121. Meanwhile, the VM information storages 210 and 410 may have records regarding VMs to be monitored by the monitoring servers 200 and 400 (*i.e.,* VMs operating in the VDI servers 300 and 500).

Next, descriptions will be made on a method of monitoring a communication of the VM 320 by the traffic monitoring unit 220.

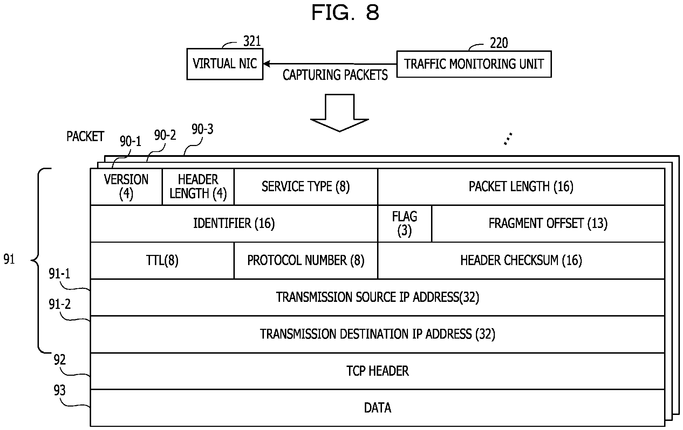

FIG. 8 is a view illustrating an example of a communication monitoring method of a VM. The traffic monitoring unit 220 monitors a communication of the VM 320 by capturing packets from the virtual NIC 321. In addition, the traffic monitoring unit 420 also similarly monitors a communication of the VM 520 by capturing the packets from the virtual NIC 521.

The traffic monitoring unit 220 acquires packets 90-1, 90-2, 90-3,... exchanged via the virtual NIC 321. The packet 90-1 includes an IP header 91, a transmission control protocol (TCP) header 92, and data 93.

The IP header 91 is a header given to data transmitted through IP communication. The IP header 91 includes a transmission source IP address 91-1 and a transmission destination IP address 91-2. The transmission source IP address 91-1 corresponds to IP addresses of transmission sources of the packets 90-1, 90-2, 90-3,.... The transmission destination IP address 91-2 corresponds to IP addresses of transmission destinations of the packets 90-1, 90-2, 90-3,.... Further, the IP header 91 includes a version, a header length, a service type, a packet length, an identifier, a flag, a fragment offset, a Time To Live (TTL), a protocol number and a header checksum. In addition, in FIG. 8, the number within parentheses in each element included in the IP header indicates the number of bits of each element.

The TCP header 92 is a header given to data transmitted through TCP communication. The data 93 is data transmitted by the packet 90-1.

In addition, the packets 90-2, 90-3,... also include IP headers similar to the IP header 91, and TCP headers similar to the TCP header 92. Also, the packets 90-2, 90-3,... include data transmitted by the packets 90-2, 90-3,....

The traffic monitoring unit 220 discriminates transmission sources and transmission destinations from the transmission source IP addresses and the transmission destination IP addresses of the packets 90-1, 90-2, 90-3,..., so as to detect operation transaction and data transaction. Here, the traffic monitoring unit 220 collates the respective IP addresses of the storage server 22, the user terminal 40-1, and the VM 320, which are stored in the VM information storage 210, with the transmission source IP addresses and the transmission destination IP addresses.

The traffic monitoring unit 220 detects, as an operation transaction, that one of the transmission source and the transmission destination is the VM 320, and the other is the user terminal 40-1, among the packets 90-1, 90-2, 90-3,.... The traffic monitoring unit 220 sets the number of packets per unit time in the operation transaction, as an operation transaction volume [the number of packets/sec]. Further, the traffic monitoring unit 220 detects, as a data transaction, that the transmission source and the transmission destination is the VM 320, and the other is the storage server 22, among the packets 90-1, 90-2, 90-3,.... The traffic monitoring unit 220 sets the number of packets per unit time in the data transaction, as a data transaction volume [the number of packets/sec] .

Next, a processing in which the monitoring server 200 monitors the VM 320 operating in the VDI server 300 will be described by using a sequence diagram. In addition, the monitoring server 400 may also monitor the VM 520 operating in the VDI server 500 by the same processing.

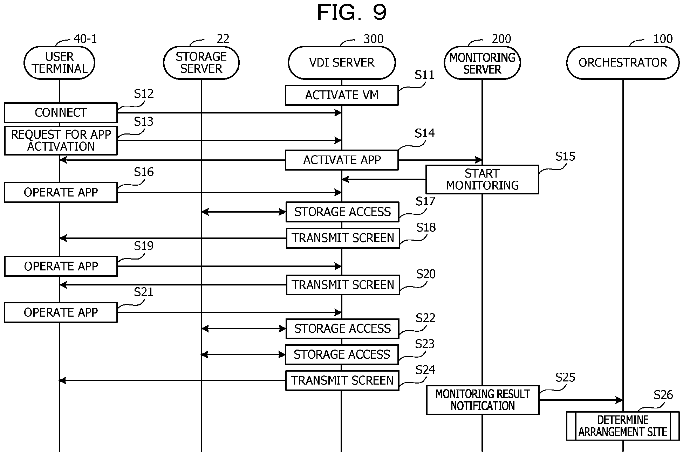

FIG. 9 is a sequence diagram illustrating an example of monitoring of VM communication by the monitoring server. First, the VM 320 having the VM name of "VM#0" is activated in the VDI server 300 (step S11). Here, a processor of the VDI server 300 is allocated to a virtual processor of the VM 320 (the VM name of "VM#0"). Also, a part of a memory of the VDI server 300 is allocated to a virtual memory of the VM 320 (the VM name of "VM#0"). Accordingly, the VM 320 is activated in the VDI server 300.

The user terminal 40-1 is connected to the activated VM 320 (step S12). Then, the user terminal 40-1 requests the VM 320 to activate the application 330 (the application name of "APP#0") (step S13). Then, the VM 320 activates the application 330 (the application name of "APP#0") (step S14). The activation of the application 330 is notified to the user terminal 40-1 and the monitoring server 200.

The traffic monitoring unit 220 of the monitoring server 200 starts monitoring of the VM 320 (step S15). The traffic monitoring unit 220 continues to monitor the VM 320 for a predetermined time. In the example of FIG. 9, it is assumed that the user terminal 40-1 operates the VM 320 three times while the traffic monitoring unit 220 is monitoring the VM 320.

At the first operation, the user terminal 40-1 transmits operation contents of the application 330, to the VM 320 (step S16). The application 330 executes a processing according to the operation contents transmitted in step S16. In the example of FIG. 9, according to the operation contents transmitted in step S16, the processing of the application 330 includes reading or writing on data stored in the storage server 22. Therefore, the VM 320 accesses the storage server 22 (step S17). For the operation contents transmitted in step S16, the VM 320 transmits a screen indicating the processing result of the application 330, to the user terminal 40-1 (step S18).

At the second operation, the user terminal 40-1 transmits operation contents of the application 330, to the VM 320 (step S19). The application 330 executes a processing according to the operation contents transmitted in step S19. In the example of FIG. 9, according to the operation contents transmitted in step S19, the processing of the application 330 does not include reading or writing on data stored in the storage server 22. For the operation contents transmitted in step S19, the VM 320 transmits a screen indicating the processing result of the application 330, to the user terminal 40-1 (step S20).

At the third operation, the user terminal 40-1 transmits operation contents of the application 330, to the VM 320 (step S21). The application 330 executes a processing according to the operation contents transmitted in step S21. In the example of FIG. 9, according to the operation contents transmitted in step S21, the processing of the application 330 includes performing reading or writing on data stored in the storage server 22 twice. Therefore, the VM 320 accesses the storage server 22 twice (steps S22 and S23). For the operation contents transmitted in step S21, the VM 320 transmits a screen indicating the processing result of the application 330, to the user terminal 40-1 (step S24).

After a lapse of a predetermined time from the start of monitoring on the VM 320 by the traffic monitoring unit 220 in step S15, the communication unit 230 of the monitoring server 200 notifies the orchestrator 100 of the result of the monitoring by the traffic monitoring unit 220 on the VM 320 (step S25). The monitoring result of the VM 320 includes an operation transaction volume and a data transaction volume. The operation transaction volume is, for example, the number of packets transmitted in the transmission of the operation contents from the user terminal 40-1 (steps S16, S19, and S21) and the screen transmission from the VM 320 (steps S18, S20, and S24), which is divided by the monitoring time [sec]. In addition, the data transaction volume is, for example, the number of packets transmitted from the VM 320 or the storage server 22 when the VM 320 accesses the storage server 22 (steps S17, S22, and S23), which is divided by the monitoring time [sec].

When the monitoring result is received, the communication unit 110 of the orchestrator 100 updates the record of the VM 320 (the VM name of "VM#0") in the VM information 121. Then, the VM arrangement determination unit 130 of the orchestrator 100 determines an arrangement site (step S26).

Next, descriptions will be made on the procedure of determining an arrangement site of the VM 320 (the VM name of "VM#0") by the orchestrator 100, with reference to a flowchart.

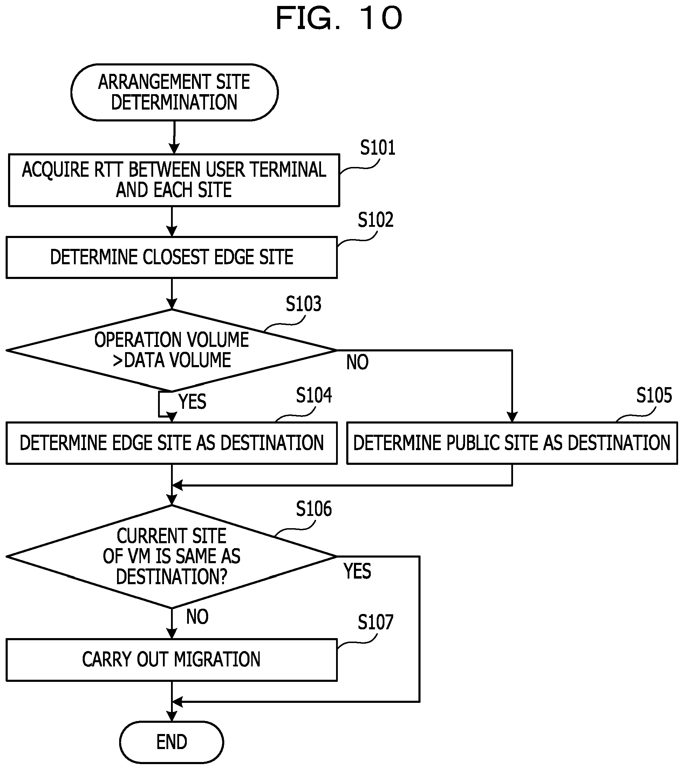

FIG. 10 is a flowchart illustrating an example of an arrangement site determining procedure. Hereinafter, the processing illustrated in FIG. 10 will be described in an order of step numbers.

[Step S101] The communication unit 110 acquires an RTT between the user terminal 40-1 and a VDI server of each edge site, from monitoring servers of the edge sites 30-1, 30-2,....

[Step S102] The VM arrangement determination unit 130 determines an edge site closest to the user terminal 40-1 on the basis of the RTT acquired by the communication unit 110 in step S101. Here, the edge site 30-1 is determined as the edge site closest to the user terminal 40-1.

[Step S103] The VM arrangement determination unit 130 determines whether an operation transaction volume is larger than a data transaction volume. For example, the VM arrangement determination unit 130 compares the item "operation transaction volume" to the item "data transaction volume," in the record that is stored in the VM information 121 and corresponds to the VM 320 (the VM name of "VM#0"). When it is determined that the operation transaction volume is larger than the data transaction volume, the VM arrangement determination unit 130 proceeds to the processing in step S104. In addition, when it is determined that the operation transaction volume is equal to or smaller than the data transaction volume, the VM arrangement determination unit 130 proceeds to the processing in step S105.

[Step S104] The VM arrangement determination unit 130 determines the edge site 30-1 that is the closest edge site, as a destination of the VM 320 (the VM name of "VM#0").

[Step S105] The VM arrangement determination unit 130 determines the public site 20, as a destination of the VM name of "VM#0."

[Step S106] The VM arrangement determination unit 130 determines whether the site as the destination of the VM 320 (the VM name of "VM#0") is the same as the site where the VM 320 (the VM name of "VM#0") is currently operating. For example, the VM arrangement determination unit 130 refers to the item "VM arrangement site" in the record that is stored in the VM information 121 and corresponds to the VM 320 (the VM name of "VM#0") in order to determine the consistency in regard to the destination site of the VM 320 (the VM name of "VM#0") determined in step S104 or S105. The VM arrangement determination unit 130 ends the processing when it is determined that the destination site of the VM 320 (the VM name of "VM#0") is the same as the site where the VM 320 (the VM name of "VM#0") is currently operating. Further, the VM arrangement determination unit 130 proceeds to the processing in step S107 when it is determined that the destination site of the VM 320 (the VM name of "VM#0") is different from the site where the VM 320 (the VM name of "VM#0") is currently operating.

[Step S107] The migration instructor 140 instructs the VDI servers 300 and 500 to perform migration of the VM 320 (the VM name of "VM#0").

Next, a processing in which the VDI servers 300 and 500 migrate the VM 320 (the VM name of "VM#0") from the VDI server 300 to the VDI server 500 will be described by using a sequence diagram.

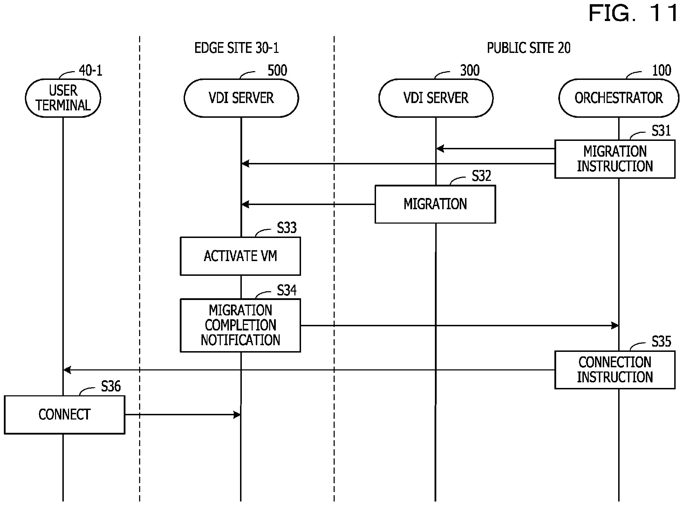

FIG. 11 is a sequence diagram illustrating an example of migration from a public site to an edge site. First, the migration instructor 140 of the orchestrator 100 instructs the VDI servers 300 and 500 to migrate the VM 320 (the VM name of "VM#0") from the VDI server 300 to the VDI server 500 (step S31). When a migration instruction is received, the migration unit 311 of the VDI server 300 migrates the operating VM 320 (the VM name of "VM#0") to the VDI server 500 (step S32). For example, the migration unit 311 transmits data of the VM 320 (the VM name of "VM#0") to the VDI server 500 through live migration.

The migration unit 511 of the VDI server 500 activates the VM 520 (the VM name of "VM#0") by using data of the VM name of "VM#0" received from the VDI server 300 (step S33). Here, the migration unit 511 allocates a processor of the VDI server 500 to a virtual processor of the VM 520 (the VM name of "VM#0"). Further, the migration unit 511 allocates a part of a memory of the VDI server 500 to a virtual memory of the VM 520 (the VM name of "VM#0"). The migration unit 511 notifies the orchestrator 100 of completion of the migration (step S34). The migration instructor 140 of the orchestrator 100 instructs the user terminal 40-1 to connect to the VM 520 (the VM name of "VM#0") activated in the VDI server 500 (step S35). Then, the user terminal 40-1 connects to the VM 520 (the VM name of "VM#0") activated in the VDI server 500 (step S36).

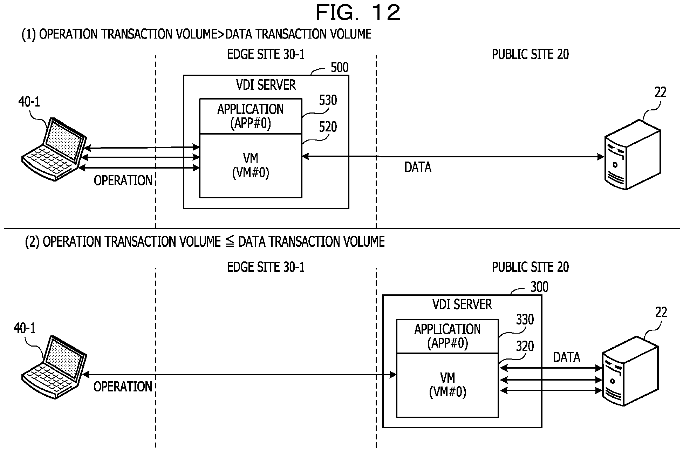

In this manner, on the basis of the operation transaction volume and the data transaction volume of the VM 320 (the VM name of "VM#0"), the VM 320 is arranged on the public site 20 or the edge site 30-1. The effect of this will be described with reference to FIG. 12 below.

FIG. 12 is a view illustrating a first arrangement example of a VM. When the operation transaction volume of the VM 320 (the VM name of "VM#0") is larger than the data transaction volume, the orchestrator 100 determines to arrange the VM 520 (the VM name of "VM#0") on the edge site 30-1. In this case, the VDI server 500 of the edge site 30-1 operates the VM 520 (the VM name of "VM#0") so that the application 530 (the application name of "APP#0") is executed on the VM 520.

In this case, the frequency of a communication between the user terminal 40-1 and the VM 520 is higher than the frequency of a communication between the storage server 22 and the VM 520. When the VM 520 operates on the edge site 30-1, since a time required for the high frequency communication (the communication between the user terminal 40-1 and the VM 520) is short, a time of response to the user terminal 40-1 is short.

Meanwhile, when the operation transaction volume of the VM 320 (the VM name of "VM#0") is equal to or smaller than the data transaction volume, the orchestrator 100 determines to arrange the VM 320 (the VM name of "VM#0") on the public site 20. In this case, the VDI server 300 of the public site 20 operates the VM 320 (the VM name of "VM#0") so that the application 330 (the application name of "APP#0") is executed on the VM 320.

In this case, the frequency of a communication between the user terminal 40-1 and the VM 320 is lower than the frequency of a communication between the storage server 22 and the VM 320. Thus, even when the time required for the communication between the user terminal 40-1 and the VM 320 is shortened due to migration of the VM 320 (the VM name of "VM#0") to the edge site 30-1, the response time is not improved very much. In this manner, according to the second embodiment, when the degree of response time improvement is relatively high, the VM 320 (the VM name of "VM#0") is arranged on the edge site 30-1, and when the degree of response time improvement is relatively low, the VM 520 (the VM name of "VM#0") is arranged on the public site 20.

Here, as another method of VM arrangement, for example, a method of arranging a VM on a site where an RTT with a user terminal is smallest may be taken into consideration. According to this method, a VM for which the operation transaction volume is equal to or smaller than the data transaction volume is also arranged on the edge site 30-1. Then, it is not possible to effectively utilize resources of the edge site 30-1. For example, when a VM whose degree of response time improvement is relatively low is arranged on the edge site 30-1, another VM whose degree of response time improvement is relatively high may not be arranged on the edge site 30-1. Also, when the VM for which the operation transaction volume is equal to or smaller than the data transaction volume is arranged on the edge site 30-1, a response time may be degraded as compared to that when the VM is arranged on the public site 20. This is because when the VM is arranged on the edge site 30-1, a time required for the high frequency communication (the communication between the storage server 22 and the VM) becomes long, as compared to that in the case of arrangement on the public site 20.

Meanwhile, according to the second embodiment, since a VM whose degree of response time improvement is relatively low is arranged on the public site 20, resources of the edge site 30-1 are effectively utilized. For example, instead of the VM whose degree of response time improvement is relatively low, another VM whose degree of response time improvement is relatively high is arranged on the edge site 30-1. Accordingly, an average response time of VMs in the entire system is improved. Further, a VM whose response time may be possibly degraded due to a migration from the public site 20 to the edge site 30-1 may be suppressed from being arranged on the edge site 30-1.

Also, in the above example, the VM 320 (the VM name of "VM#0") accesses the storage server 22 of the public site 20 and exchanges user data, but the storage server may not be arranged on the public site. For example, the edge site may have a storage server that stores data used by a VM operating on each edge site.

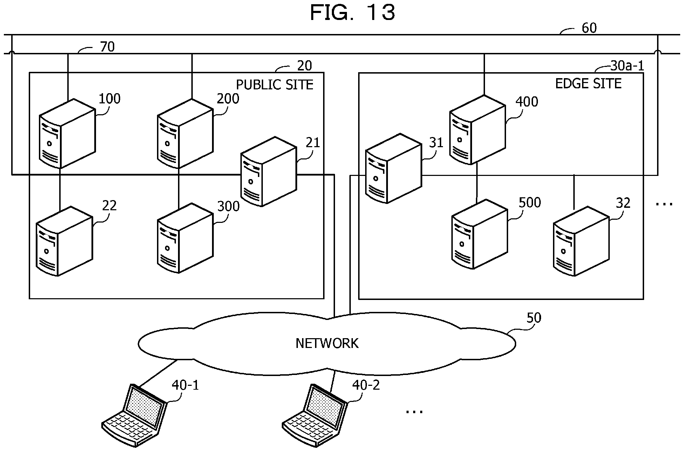

FIG. 13 is a view illustrating a system configuration example in which each edge site has a storage server. In the system configuration of FIG. 13, instead of the edge sites 30-1, 30-2,... in the system configuration of FIG. 2, edge sites 30a-1,... are included.

Each of the edge sites 30a-1,... has a storage server, in addition to the configuration of the edge sites 30-1, 30-2,.... For example, the edge site 30a-1 includes the gateway 31, a storage server 32, the monitoring server 400, and the VDI server 500. The storage server 32 stores data used by the user in the VDI service by the VDI server 500. In this case, the storage server 22 only has to store data used by the user in the VDI service by the VDI server 300.

Here, when arrangement of a certain VM is changed, data corresponding to the corresponding VM is transmitted, from a storage server on the arrangement site before the change, to a storage server on the arrangement site after the change. For example, when the VM 320 (the VM name of "VM#0") that has operated in the VDI server 300 is migrated to the VDI server 500, data of the VM 320 (the VM name of "VM#0") is transmitted from the storage server 22 to the storage server 32. Accordingly, the VM 520 (the VM name of "VM#0") may operate in the VDI server 500.

Even in the case of the example of FIG. 13, the same effect as that of the second embodiment may be obtained by the same VM arrangement determination processing as that of the second embodiment.

[Third Embodiment]

Next, a third embodiment will be described. In the third embodiment, when there is an upper limit of arrangement on an edge site, the priority of arrangement on the edge site is determined for a plurality of VMs. The third embodiment is implemented by the same system configuration as that of FIG. 2. Meanwhile, the function of the orchestrator in the third embodiment is partially different from that of the orchestrator 100 in the second embodiment.

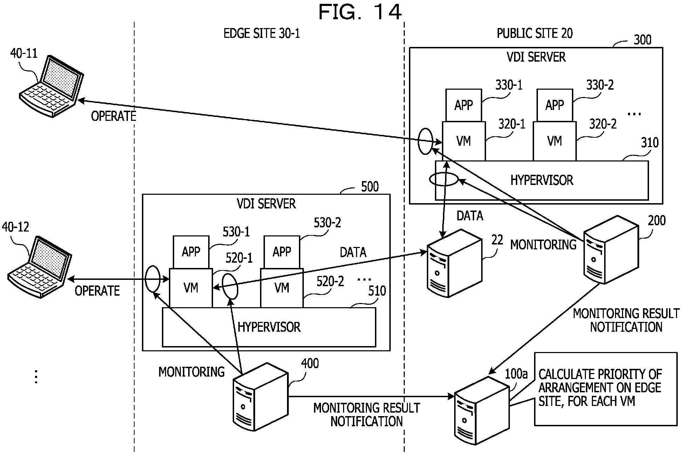

FIG. 14 is a view illustrating the outline of the third embodiment. In the third embodiment, an orchestrator 100a determines the priority of arrangement on an edge site, for each operating VM. Each VM is arranged on the public site 20 or any one of the edge sites 30-1, 30-2,... on the basis of the priority. Hereinafter, descriptions will be made on a method of determining an arrangement site of a VM (a VM as an arrangement candidate for the edge site 30-1) providing a VDI service to a user terminal whose closest edge site is the edge site 30-1.

User terminals 40-11, 40-12,... are user terminals whose closest edge site is the edge site 30-1. In the VDI server 500 of the edge site 30-1, the hypervisor 510 manages VMs 520-1, 520-2,.... In addition, the number of VMs operating in the VDI server 500 is equal to or smaller than the arrangement upper limit of the edge site 30-1. In the VMs 520-1, 520-2,..., applications 530-1, 530-2,... are running. The VMs 520-1, 520-2,... are operated by any of the user terminals 40-11, 40-12,.... The monitoring server 400 notifies the orchestrator 100a of operation transaction volumes and data transaction volumes of the VMs 520-1, 520-2,....

In the VDI server 300 of the public site 20, the hypervisor 310 manages VMs 320-1, 320-2,.... In the VMs 320-1, 320-2,..., applications 330-1, 330-2,... are running. The VMs 320-1, 320-2,... are operated by any of the user terminals 40-11, 40-12,.... In addition, the hypervisor 310 may further manage other VMs. The monitoring server 200 notifies the orchestrator 100a of operation transaction volumes and data transaction volumes of the VMs 320-1, 320-2,....

The orchestrator 100a calculates the priority of arrangement on the edge site 30-1, for the VMs 320-1, 320-2,... operating in the VDI server 300 and the VMs 520-1, 520-2,... operating in the VDI server 500. The priority is calculated on the basis of the operation transaction volume and the data transaction volume of each VM. The orchestrator 100a arranges VMs corresponding to the number of machines of the arrangement upper limit of the VDI server 500, in a descending order of priority, in the VDI server 500. The orchestrator 100a arranges VMs not included in the number of machines of the arrangement upper limit of the VDI server 500, in a descending order of priority, in the VDI server 300.

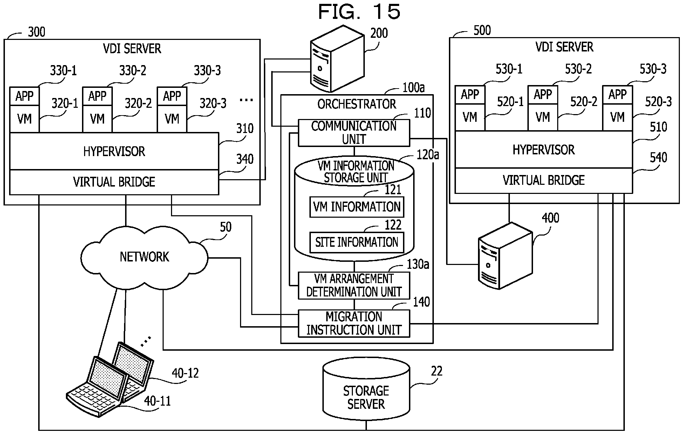

FIG. 15 is a block diagram illustrating an example of the function included in the information processing system of the third embodiment. The orchestrator 100a includes a VM information storage 120a and a VM arrangement determination unit 130a, instead of the VM information storage 120 and the VM arrangement determination unit 130 of the orchestrator 100.

The VM information storage 120a stores the VM information 121 and site information 122. The site information 122 is information on the edge sites 30-1, 30-2,.... The site information 122 includes information of VMs as site arrangement candidates for each of the edge sites 30-1, 30-2,.... Further, the site information 122 includes the arrangement upper limit of the VDI server of each of the edge sites 30-1, 30-2,....

The VM arrangement determination unit 130a calculates the priority of arrangement in the VDI server 500, for each VM as an arrangement candidate for the edge site 30-1, on the basis of the operation transaction volume and the data transaction volume of each VM, which are included in the VM information 121. The VM arrangement determination unit 130a determines to arrange VMs corresponding to the number of machines of the arrangement upper limit of the VDI server 500, in a descending order of priority, in the VDI server 500. The VM arrangement determination unit 130a determines to arrange VMs not included in the number of machines of the arrangement upper limit of the VDI server 500, in a descending order of priority, in the VDI server 300. The migration instructor 140 instructs the VDI servers 300 and 500 to migrate a VM for which a VDI server for current operation is different from a VDI server determined as an arrangement destination, among VMs as arrangement candidates for the edge site 30-1.

In the VDI server 300, the hypervisor 310 manages the VMs 320-1, 320-2, 320-3,.... The VMs 320-1, 320-2, 320-3,... include VMs as arrangement candidates for the edge site 30-1. Also, the VMs 320-1, 320-2, 320-3,... may include VMs as arrangement candidates for the edge sites 30-2,.... In the VMs 320-1, 320-2, 320-3,..., the applications 330-1, 330-2, 330-3,... are running.

According to a migration instruction from the orchestrator 100a, the hypervisor 310 performs migration of a VM determined to be arranged in the VDI server 500, among the VMs 320-1, 320-2, 320-3,.... When a migration instruction is received from the orchestrator 100a, the hypervisor 310 transmits data of the VM to be arranged in the VDI server 500, to the VDI server 500. Also, the hypervisor 310 performs setting such that a VM migrated from the VDI server 500 may be operated.

In the VDI server 500, the hypervisor 510 manages the VMs 520-1, 520-2, 520-3. The VMs 520-1, 520-2, 520-3 are VMs as arrangement candidates for the edge site 30-1. In the VMs 520-1, 520-2, 520-3, the applications 530-1, 530-2, 530-3 are running.

According to a migration instruction from the orchestrator 100a, the hypervisor 510 performs migration of a VM determined to be arranged in the VDI server 300, among the VMs 520-1, 520-2, 520-3. When a migration instruction is received from the orchestrator 100a, the hypervisor 510 transmits data of the VM to be arranged in the VDI server 300, to the VDI server 300. Also, the hypervisor 510 performs setting such that a VM migrated from the VDI server 300 may be operated.

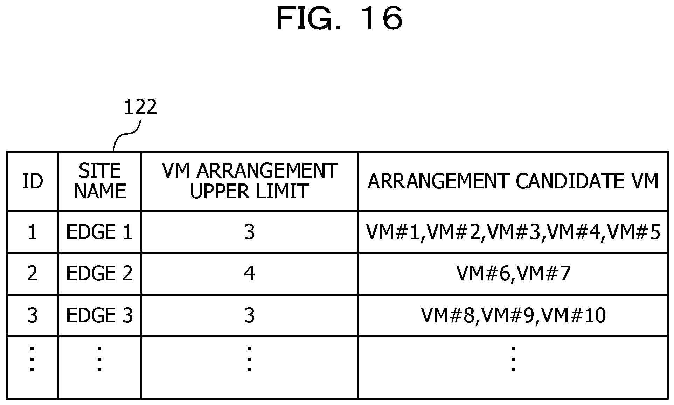

Next, site information held by the orchestrator 100a will be described in detail with reference to FIG. 16.

FIG. 16 is a view illustrating an example of site information. In the site information 122, records corresponding to the edge sites 30-1, 30-2,... are registered. The record of each edge site includes an ID, a site name, a VM arrangement upper limit, and an arrangement candidate VM.

The ID is an identification number of each edge site. The site name is a name of each edge site. The VM arrangement upper limit is an arrangement upper limit of the VDI server of each edge site. The arrangement upper limit of a certain VDI server is, for example, a value (rounding down the decimal part) obtained by dividing an upper limit of virtual processors allocated to a processor included in the corresponding VDI server by the number of virtual processors of one VM. The arrangement candidate VM is a list of VMs as arrangement candidates for each edge site.

Next, descriptions will be made on a VM arrangement determination method of the third embodiment.

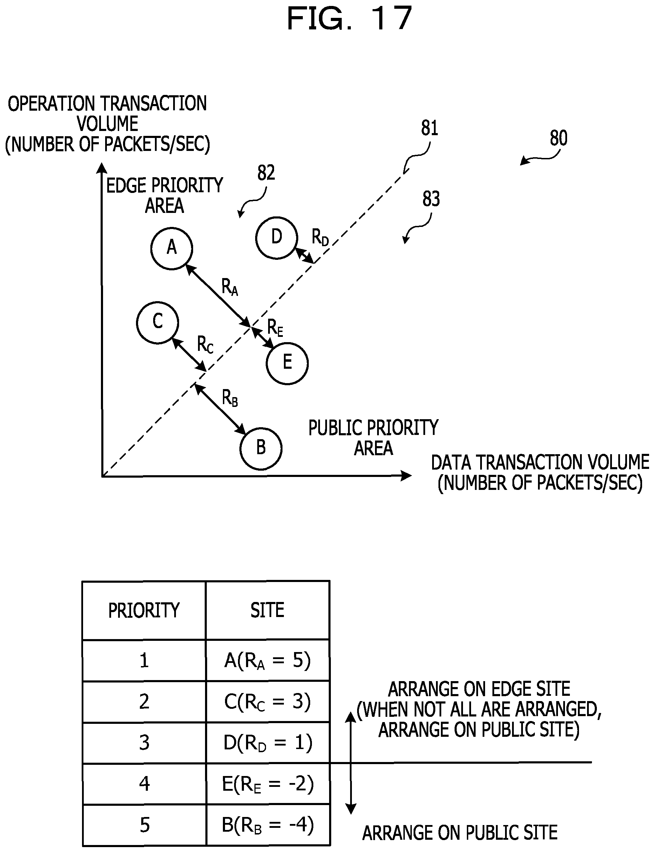

FIG. 17 is a view illustrating an example of the arrangement site determination method of the third embodiment. The VM arrangement determination unit 130a determines the priority according to the position where a point indicating each VM is present on the graph 80. The VM arrangement determination unit 130a calculates a priority $R_x$ by the following equation, for each VM as an arrangement candidate for the edge site 30-1.

$$R_x = \begin{cases} \sqrt{\left(a - \frac{a+b}{2}\right)^2 + \left(b - \frac{a+b}{2}\right)^2} & (a > b) \\ (-1) \times \sqrt{\left(a - \frac{a+b}{2}\right)^2 + \left(b - \frac{a+b}{2}\right)^2} & (a \leq b) \end{cases}$$

$$= \frac{a-b}{\sqrt{2}} \qquad\qquad (1)$$

The symbol "a" is an operation transaction volume of a VM. The symbol "b" is a data transaction volume of a VM. When a>b, that is, when a point indicating a VM is present in the edge priority area 82, $R_x$ is calculated by the equation above the division in the case of the equation (1). Two terms within the square root of this equation indicate the respective squares of two sides, except for a hypotenuse, in a right triangle whose hypotenuse is a perpendicular line drawn from the point indicating the VM to the boundary line 81. That is, when a>b, $R_x$ indicates a distance between the point indicating the VM and the boundary line 81.

In addition, when a≤b, that is, when a point indicating a VM is present in the public priority area 83, $R_x$ is calculated by the equation below the division in the case of the equation (1). This equation is obtained by multiplying the equation above the division by "-1" in the case of the equation (1). That is, when a≤b, $R_x$ indicates inversion of a sign of a distance between the point indicating the VM and the boundary line 81. In addition, the equation for calculating $R_x$ is expressed by a modified equation of the equation (1) in which the case of a>b and the case of a≤b are combined.

When a point indicating a VM is present in the edge priority area 82 ($R_x$>0), the VM arrangement determination unit 130a arranges the corresponding VM on an edge site. Meanwhile, when a point indicating a VM is present in the public priority area 83 ($R_x$≤0), the corresponding VM is arranged on a public site. Here, when there is an arrangement upper limit in the edge site, the VM arrangement determination unit 130a preferentially arranges a VM having a larger $R_x$ (far from the boundary line 81), on the edge site.

For example, a case where VMs "A" to "E" as arrangement candidates for the edge site 30-1 have priorities $R_A$ to $R_E$, respectively ($R_A$=5, $R_B$=-4, $R_C$=3, $R_D$=1, and $R_E$=-2) is taken into consideration. In this case, the VM arrangement determination unit 130a arranges the VM "B" and the VM "E" for which $R_x$≤0, on the public site 20. The VM arrangement determination unit 130a arranges the VM "A," the VM "C," and the VM "D" for which $R_x$>0 in a descending order of $R_x$ (the order of the VM "A," the VM "C," and the VM "D"), on the edge site 30-1 until the arrangement upper limit is reached. Then, the VM arrangement determination unit 130a arranges one that cannot be arranged on the edge site 30-1 among the VM "A," the VM "C," and the VM "D," on the public site 20.

Next, descriptions will be made on the procedure of determining an arrangement site of a VM as an arrangement candidate for the edge site 30-1, by the orchestrator 100a, with reference to a flowchart.

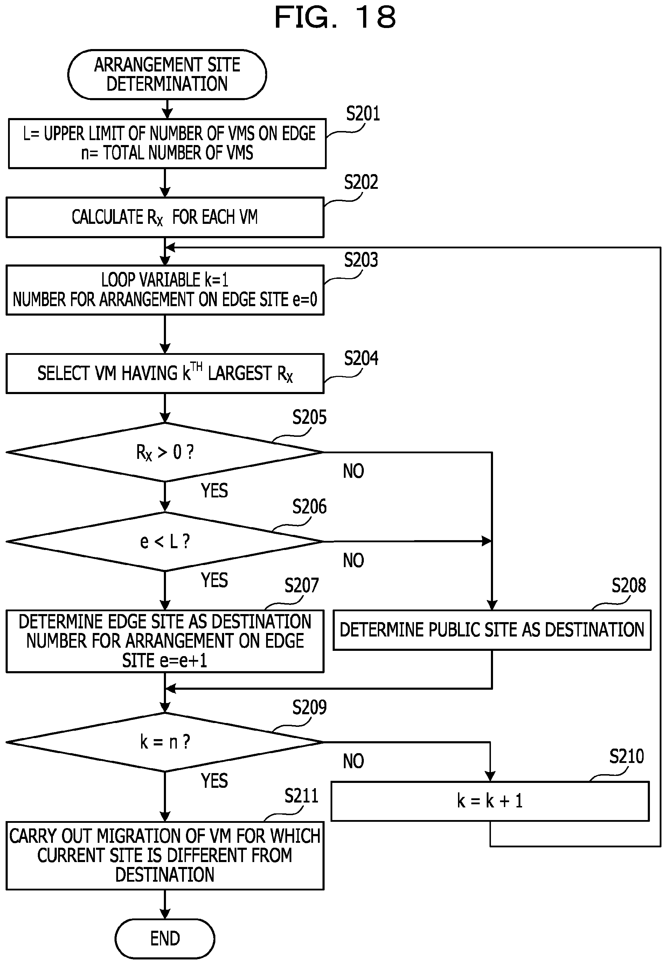

FIG. 18 is a flowchart illustrating an example of an arrangement site determining procedure of the third embodiment. Hereinafter, the processing illustrated in FIG. 18 will be described in an order of step numbers.

[Step S201] The VM arrangement determination unit 130a sets an integer L to the upper limit of VMs that may be arranged on the edge site 30-1 (the arrangement upper limit of the edge site 30-1). For example, the VM arrangement determination unit 130a performs setting of the integer L by referring to the value of the item "VM arrangement upper limit" from the record of the edge site 30-1 stored in the site information 122. Further, the VM arrangement determination unit 130a sets an integer "n" to the total number of VMs as arrangement candidates for the edge site 30-1. For example, the VM arrangement determination unit 130a sets the integer "n" to the number of registered VMs, by referring to the item "arrangement candidate VM" from the record of the edge site 30-1 stored in the site information 122.

[Step S202] The VM arrangement determination unit 130a calculates the priority $R_x$ for each VM as the arrangement candidate for the edge site 30-1. For example, the VM arrangement determination unit 130a specifies VMs as the arrangement candidates for the edge site 30-1, by referring to the item "arrangement candidate VM" from the record that corresponds to the edge site 30-1 and is stored in the site information 122. The VM arrangement determination unit 130a calculates the priority $R_x$ for each VM by the equation (1) with reference to the item "operation transaction volume" and the item "data transaction volume" in the record that is stored in the VM information 121 and corresponds to each VM as the arrangement candidate for the edge site 30-1.

[Step S203] The VM arrangement determination unit 130a sets the initial value of a loop variable "k" to 1. Further, the VM arrangement determination unit 130a sets the initial value of a variable "e" that indicates the number of VMs determined to be arranged on the edge site 30-1, to 0.

[Step S204] The VM arrangement determination unit 130a selects a VM that has the $k^{th}$ largest $R_x$. In the subsequent steps S205 to S208, the processing is performed on the VM selected here.

[Step S205] The VM arrangement determination unit 130a determines whether $R_x$ of the VM selected in step S204 is larger than 0 ($R_x>0$). When it is determined that $R_x$ is larger than 0, the VM arrangement determination unit 130a proceeds to the processing in step S206. In addition, when it is determined that $R_x$ is equal to or smaller than 0, the VM arrangement determination unit 130a proceeds to the processing in step S208.

[Step S206] The VM arrangement determination unit 130a determines whether the variable "e" is smaller than the integer L ($e<L$). That is, the VM arrangement determination unit 130a determines whether the number of VMs determined to be arranged on the edge site 30-1 is less than the arrangement upper limit of the edge site 30-1. When it is determined that "e" is smaller than L, the VM arrangement determination unit 130a proceeds to the processing in step S207. In addition, when it is determined that "e" is equal to or larger than L, the VM arrangement determination unit 130a proceeds to the processing in step S208.

[Step S207] The VM arrangement determination unit 130a determines the edge site 30-1 as a destination of the VM selected in step S204. Then, the VM arrangement determination unit 130a increases the value of "e" by 1 ($e=e+1$), and proceeds to the processing in step S209.

[Step S208] The VM arrangement determination unit 130a determines the public site 20 as a destination of the VM selected in step S204.

[Step S209] The VM arrangement determination unit 130a determines whether the variable "k" is equal to the integer "n" ($k=n$). That is, the VM arrangement determination unit 130a determines whether the processing in steps S204 to S208 has been executed for all VMs as the arrangement candidates for the edge site 30-1. When it is determined that the variable "k" is equal to the integer "n," the VM arrangement determination unit 130a proceeds to the processing in step S211. In addition, when it is determined that the variable "k" is not equal to the integer "n," the VM arrangement determination unit 130a proceeds to the processing in step S210.

[Step S210] The VM arrangement determination unit 130a increases the value of "k" by 1 ($k=k+1$), and proceeds to the processing in step S204.

[Step S211] The migration instructor 140 instructs the VDI servers 300 and 500 to migrate a VM for which a site for current operation is different from a destination site.

In this manner, each VM is arranged on the public site 20 or the edge site 30-1 on the basis of the priority of arrangement of each VM (as an arrangement candidate for the edge site 30-1) on the edge site 30-1.

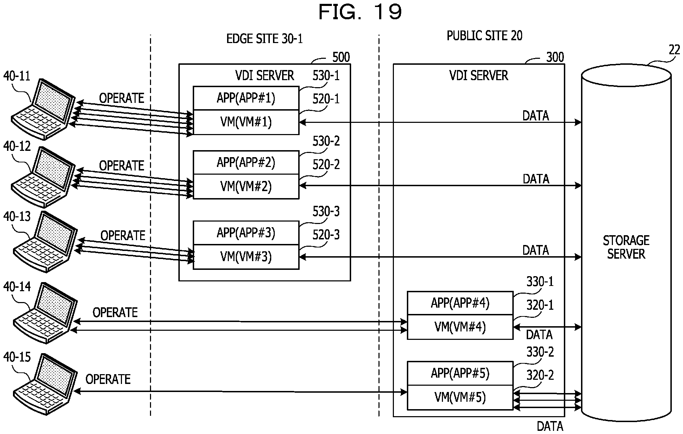

FIG. 19 is a view illustrating a second arrangement example of a VM. Hereinafter, an example will be illustrated in which VMs operated by the user terminals 40-11 to 40-15 whose closest edge site is the edge site 30-1 are arranged by the VM arrangement determination of the third embodiment.

The user terminal 40-11 operates a VM having a VM name of "VM#1" for which "the operation transaction volume: the data transaction volume" is 5: 1, and the user terminal 40-12 operates a VM having a VM name of "VM#2" for which "the operation transaction volume: the data transaction volume" is 4:1. The user terminal 40-13 operates a VM having a VM name of "VM#3" for which "the operation transaction volume: the data transaction volume" is 3:1. The user terminal 40-14 operates a VM having a VM name of "VM#4" for which "the operation transaction volume: the data transaction volume" is 2:1. The user terminal 40-15 operates a VM having a VM name of "VM#5" for which "the operation transaction volume: the data transaction volume" is 1:3.

Here, the VM 520-1 with the VM name of "VM#1," the VM 520-2 with the VM name of "VM#2," and the VM 520-3 with the VM name of "VM#3" are arranged in the VDI server 500 of the edge site 30-1 (the arrangement upper limit=3). In addition, in the VM 520-1, the application 530-1 having an application name of "APP#1" is executed. Further, in the VM 520-2, the application 530-2 having an application name of "APP#2" is executed. Also, in the VM 520-3, the application 530-3 having an application name of "APP#3" is executed.

Further, the VM 320-1 with the VM name of "VM#4" and the VM 320-2 with the VM name of "VM#5" are arranged in the VDI server 300 of the public site 20. In addition, in the VM 320-1, the application 330-1 having an application name of "APP#4" is executed. Further, in the VM 320-2, the application 330-2 having an application name of "APP#5" is executed.

In this manner, among the VMs as arrangement candidates for the edge site 30-1, VMs for which the operation transaction volumes are larger than the data transaction volumes are preferentially arranged on the edge site 30-1. For example, in a method of arranging a VM for which the operation transaction volume is larger than the data transaction volume, on the edge site 30-1, VMs exceeding the arrangement upper limit of the edge site 30-1 may be selected as targets to be arranged on the edge site 30-1. Therefore, in the VM arrangement determination method of the third embodiment, the priority $R_x$ is calculated on the basis of the operation transaction volume and the data transaction volume. Then, VMs for which the operation transaction volumes are larger than the data transaction volumes are arranged on the edge site 30-1 in a descending order of priority $R_x$.

Therefore, a VM whose degree of response time improvement is relatively high may be arranged on the edge site 30-1. Accordingly, when resources of the edge site 30-1 are limited, VMs may be arranged such that the average of response times of all VMs as arrangement candidates for the edge site 30-1 may be shortened.

[Fourth Embodiment]

Next, a fourth embodiment will be described. In the fourth embodiment, when there is a vacancy in an edge site, as many VMs as possible are arranged on the edge site. The fourth embodiment may be implemented by the same system configuration as the third embodiment. Meanwhile, the processing of the VM arrangement determination unit 130a in the orchestrator 100a in the fourth embodiment is different from that in the third embodiment.

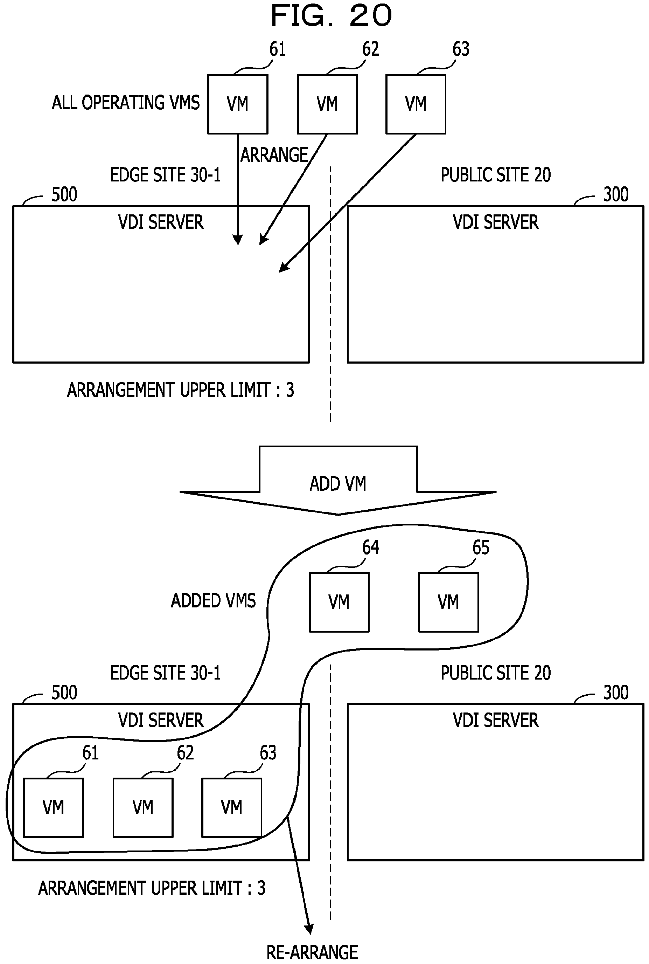

FIG. 20 is a view illustrating the outline of the fourth embodiment. In the fourth embodiment, when the number of VMs as arrangement candidates for the edge site 30-1 is equal to or smaller than the arrangement upper limit of the edge site 30-1, all VMs as the arrangement candidates for the edge site 30-1 are arranged on the edge site 30-1. Then, when the number of VMs as the arrangement candidates for the edge site 30-1 exceeds the arrangement upper limit of the edge site 30-1, the VMs as the arrangement candidates for the edge site 30-1 are re-arranged.

For example, in the information processing system, it is assumed that VMs 61, 62, and 63 which are arrangement candidates for the edge site 30-1 (the arrangement upper limit=3) are operating. Here, it is assumed that other VMs which are the arrangement candidates for the edge site 30-1 are not operating. In this case, the VMs 61, 62, and 63 are arranged in the VDI server 500 of the edge site 30-1, regardless of the operation transaction volumes and the data transaction volumes.

Then, in the information processing system, it is assumed that VMs 64 and 65 as the arrangement candidates for the edge site 30-1 start to operate. Then, on the basis of the priority $R_x$, it is determined whether each of the VMs 61 to 65 is to be arranged on the edge site 30-1, or arranged on the public site 20. Specifically, when VMs arranged on the edge site 30-1 reach the arrangement upper limit of the edge site 30-1 through arrangement on the edge site 30-1 in a descending order of priority $R_x$, remaining VMs are arranged on the public site 20. In addition, here, even a VM for which the operation transaction volume is equal to or smaller than the data transaction volume ($R_x \leq 0$) may be arranged on the edge site 30-1.

Next, descriptions will be made on the procedure of determining an arrangement site of a VM as an arrangement candidate for the edge site 30-1, by the orchestrator 100a, with reference to a flowchart.

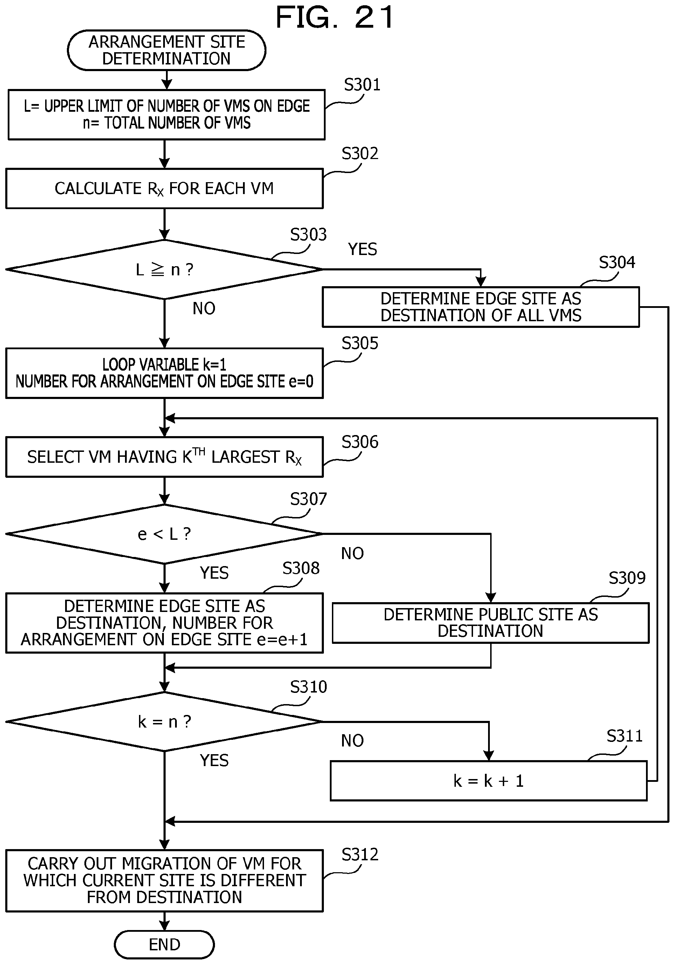

FIG. 21 is a flowchart illustrating an example of an arrangement site determining procedure of the fourth embodiment. Hereinafter, the processing illustrated in FIG. 21 will be described in an order of step numbers.

[Step S301] The VM arrangement determination unit 130a sets an integer L to the upper limit (the arrangement upper limit of the edge site 30-1) of VMs that may be arranged on the edge site 30-1. For example, the VM arrangement determination unit 130a performs setting of the integer L by referring to the value of the item "VM arrangement upper limit" from the record of the edge site 30-1 stored in the site information 122. Further, the VM arrangement determination unit 130a sets an integer "n" to the total number of VMs as arrangement candidates for the edge site 30-1. For example, the VM arrangement determination unit 130a sets the integer "n" to the number of registered VMs by referring to the item "arrangement candidate VM" from the record of the edge site 30-1 stored in the site information 122.

[Step S302] The VM arrangement determination unit 130a calculates the priority $R_x$ for each VM as the arrangement candidate for the edge site 30-1. For example, the VM arrangement determination unit 130a specifies VMs as the arrangement candidates for the edge site 30-1 by referring to the item "arrangement candidate VM" from the record that corresponds to the edge site 30-1 and is stored in the site information 122. The VM arrangement determination unit 130a calculates the priority $R_x$ for each VM by the equation (1) with reference to the item "operation transaction volume" and the item "data transaction volume" in the record that is stored in the VM information 121 and corresponds to each VM as the arrangement candidate for the edge site 30-1.

[Step S303] The VM arrangement determination unit 130a determines whether the integer L is equal to or larger than the integer "n" ($L \geq n$). That is, the VM arrangement determination unit 130a determines whether the arrangement upper limit of the edge site 30-1 is equal to or larger than the total number of VMs as the arrangement candidates for the edge site 30-1. When it is determined that L is equal to or larger than "n," the VM arrangement determination unit 130a proceeds to the processing in step S304. In addition, when it is determined that L is smaller than "n," the VM arrangement determination unit 130a proceeds to the processing in step S305.

[Step S304] The VM arrangement determination unit 130a determines the edge site 30-1, as a destination of all VMs as the arrangement candidates for the edge site 30-1. Then, the VM arrangement determination unit 130a proceeds to the processing in step S312.

[Step S305] The VM arrangement determination unit 130a sets the initial value of a loop variable "k" to 1. Further, the VM arrangement determination unit 130a sets the initial value of a variable "e" that indicates the number of VMs determined to be arranged on the edge site 30-1, to 0.

[Step S306] The VM arrangement determination unit 130a selects a VM having the $k^{th}$ largest $R_x$. In the subsequent steps S307 to S309, the processing is performed on the VM selected here.

[Step S307] The VM arrangement determination unit 130a determines whether the variable "e" is smaller than the integer L (e<L). That is, the VM arrangement determination unit 130a determines whether the number of VMs determined to be arranged on the edge site 30-1 is less than the arrangement upper limit of the edge site 30-1. When it is determined that "e" is smaller than L, the VM arrangement determination unit 130a proceeds to the processing in step S308. In addition, when it is determined that "e" is equal to or larger than L, the VM arrangement determination unit 130a proceeds to the processing in step S309.

[Step S308] The VM arrangement determination unit 130a determines the edge site 30-1 as a destination of the VM selected in step S306. Then, the VM arrangement determination unit 130a increases the value of "e" by 1 (e=e+1), and proceeds to the processing in step S310.

[Step S309] The VM arrangement determination unit 130a determines the public site 20 as a destination of the VM selected in step S306.

[Step S310] The VM arrangement determination unit 130a determines whether the variable "k" is equal to the integer "n" (k=n). That is, the VM arrangement determination unit 130a determines whether the processing in steps S306 to S309 has been executed for all VMs as the arrangement candidates for the edge site 30-1. When it is determined that the variable "k" is equal to the integer "n," the VM arrangement determination unit 130a proceeds to the processing in step S312. In addition, when it is determined that the variable "k" is not equal to the integer "n," the VM arrangement determination unit 130a proceeds to the processing in step S311.

[Step S311] The VM arrangement determination unit 130a increases the value of "k" by 1 (k=k+1), and proceeds to the processing in step S306.

[Step S312] The migration instructor 140 instructs the VDI servers 300 and 500 to migrate a VM for which a site for current operation is different from a destination site.

In this manner, each VM is arranged on the public site 20 or the edge site 30-1 on the basis of the priority of arrangement of each VM (as an arrangement candidate for the edge site 30-1) on the edge site 30-1.

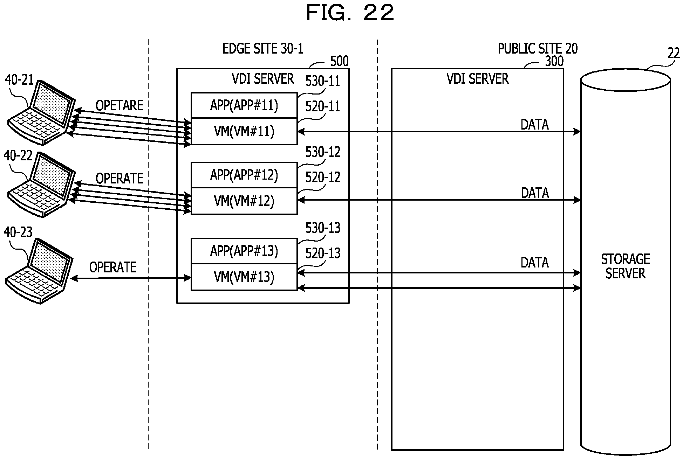

FIG. 22 is a view illustrating a third arrangement example of a VM. Hereinafter, an example will be illustrated in which VMs operated by user terminals 40-21 to 40-23 whose closest edge site is the edge site 30-1 are arranged by the VM arrangement determination of the fourth embodiment.

The user terminal 40-21 operates a VM having a VM name of "VM#11" for which the operation transaction volume: the data transaction volume is 5:1. The user terminal 40-22 operates a VM having a VM name of "VM#12" for which the operation transaction volume: the data transaction volume is 4:1. The user terminal 40-23 operates a VM having a VM name of "VM#13" for which the operation transaction volume: the data transaction volume is 1:2.

Here, a VM 520-11 with the VM name of "VM#11," a VM 520-12 with the VM name of "VM#12," and a VM 520-13 with the VM name of "VM#13" are arranged in the VDI server 500 of the edge site 30-1 (the arrangement upper limit=3). In addition, in the VM 520-11, an application 530-11 having an application name of "APP#11" is executed. Further, in the VM 520-12, an application 530-12 having an application name of "APP#12" is executed. Further, in the VM 520-13, an application 530-13 having an application name of "APP#13" is executed.

In this manner, when the number of VMs as arrangement candidates for the edge site 30-1 is equal to or smaller than the arrangement upper limit of the edge site 30-1, all VMs as the arrangement candidates for the edge site 30-1 are arranged in the VDI server 500. Meanwhile, in the second embodiment and the third embodiment, even when the number of VMs as arrangement candidates for the edge site 30-1 is equal to or smaller than the arrangement upper limit of the edge site 30-1, a VM for which the operation transaction volume is equal to or smaller than the data transaction volume is arranged on the public site 20. Therefore, in the fourth embodiment, when the number of VMs as arrangement candidates for the edge site 30-1 is equal to or smaller than the arrangement upper limit of the edge site 30-1, resources of the edge site 30-1 may be effectively utilized.

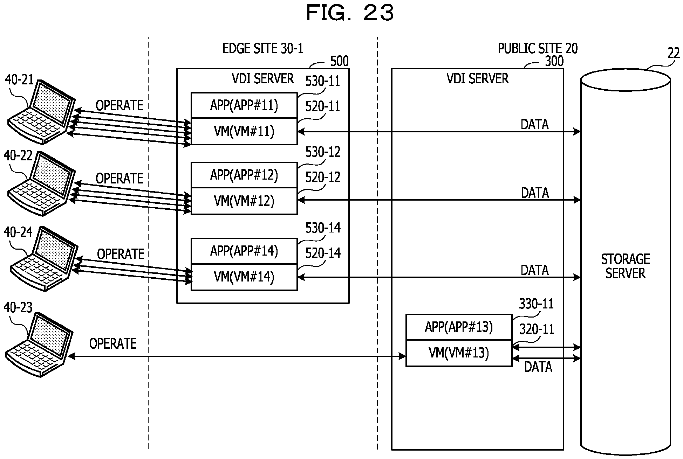

FIG. 23 is a view illustrating a fourth arrangement example of a VM. Hereinafter, an example of a case will be illustrated in which an example of FIG. 22 is added with a VM operated by a user terminal 40-24 whose closest edge site is the edge site 30-1.

The user terminal 40-24 operates a VM having a VM name of "VM#14" for which the operation transaction volume: the data transaction volume is 3: 1. Here, the VM 520-11 with the VM name of "VM#11," the VM 520-12 with the VM name of "VM#12," and a VM 520-14 with the VM name of "VM#14" are arranged in the VDI server 500 of the edge site 30-1. Further, an application 530-14 having an application name of "APP#14" is executed in the VM 520-14.

Further, a VM 320-11 with the VM name of "VM#13" is arranged in the VDI server 300 of the public site 20. Further, an application 330-11 having the application name of "APP#13" is executed in the VM 320-11.

In this manner, when the VM 520-14 with the VM name of "VM#14" for which $R_x>0$ is added, the VM 320-11 with the VM name of "VM#13" for which $R_x \leq 0$ is migrated to the VDI server 300 of the public site 20. That is, as in the third embodiment, a VM whose degree of response time improvement is high is preferentially arranged on the edge site 30-1. Accordingly, when resources of the edge site 30-1 are limited, VMs may be arranged such that the average of response times of all VMs as arrangement candidates for the edge site 30-1 may be shortened.

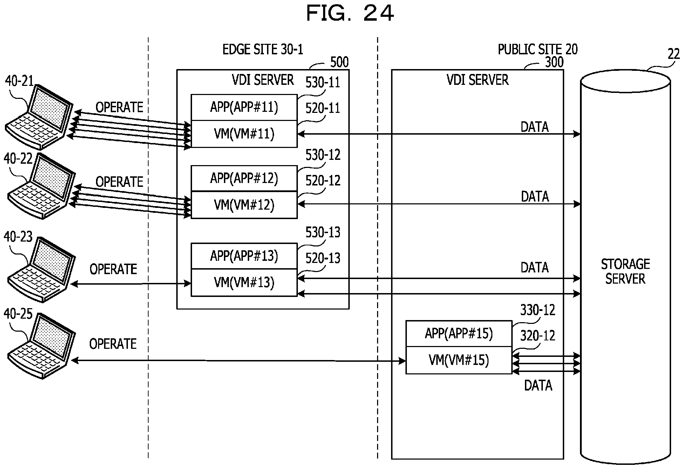

FIG. 24 is a view illustrating a fifth arrangement example of a VM. Hereinafter, an example of a case will be illustrated in which an example of FIG. 22 is added with a VM operated by a user terminal 40-25 whose closest edge site is the edge site 30-1.

The user terminal 40-25 operates a VM having a VM name of "VM#15" for which "the operation transaction volume: the data transaction volume" is 1:3. Here, the VM 520-11 with the VM name of "VM#11," the VM 520-12 with the VM name of "VM#12," and the VM 520-13 with the VM name of "VM#13" are arranged in the VDI server 500 of the edge site 30-1. Further, the VM 320-12 with the VM name of "VM#15" is arranged in the VDI server 300 of the public site 20. Further, an application 330-12 having an application name of "APP#15" is executed in the VM 320-12.

In this manner, when the VM 320-12 with the VM name of "VM#15," which has a smaller $R_x$ than the VM 520-13 with the VM name of "VM#13," is added, the VM 320-12 with the VM name of "VM#15" is arranged in the VDI server 300 of the public site 20. Meanwhile, in the second embodiment and the third embodiment, the VM 520-13 with the VM name of "VM#13" is also arranged on the public site 20 because the operation transaction volume is equal to or smaller than the data transaction volume. In the fourth embodiment, even when all VMs for which the operation transaction volumes are larger than the data transaction volumes are arranged in the VDI server 500, since there is a vacancy in the VDI server 500, the VM 520-13 with the VM name of "VM#13" is arranged in the VDI server 500. Therefore, when the number of VMs for which the operation transaction volumes are larger than the data transaction volumes does not reach the arrangement upper limit of the edge site 30-1, resources of the edge site 30-1 may be effectively utilized.

While the embodiments have been described, the configuration of each unit illustrated in the embodiments may be replaced with another having the same function. In addition, other arbitrary components or steps may be added. Further, in the embodiments described above, any two or more configurations (features) may be combined with each other.

**Claims**

1. An information processing apparatus, comprising:
   a processor configured to:

   acquire a first traffic amount of communication performed between a user terminal and a virtual machine that operates in a first information processing apparatus or a second information processing apparatus and executes a processing according to an operation from the user terminal to respond with a result, the second information processing apparatus being accessible from the user terminal in a shorter response time than the first information processing apparatus;
   acquire a second traffic amount of communication performed between the virtual machine and a storage; and
   determine whether to cause the virtual machine to operate in the first information processing apparatus or the second information processing apparatus based on the first traffic amount and the second traffic amount.

2. The information processing apparatus according to claim 1, wherein
   the processor is further configured to:

   migrate the virtual machine to the second information processing apparatus when determining that the virtual machine is to be operated in the second information processing apparatus while the virtual machine is operating in the first information processing apparatus; and
   migrate the virtual machine to the first information processing apparatus when determining that the virtual machine is to be operated in the first information processing apparatus while the virtual machine is operating in the second information processing apparatus.

3. The information processing apparatus according to claim 1 or 2, wherein
   the processor is further configured to
   determine that the virtual machine is to be operated in the second information processing apparatus when a ratio of the second traffic amount to the first traffic amount is less than a predetermined value.

**4.** The information processing apparatus according to claim 1 or 2, wherein
the processor is further configured to:

acquire the first traffic amount and the second traffic amount for each of a plurality of virtual machines that operate in the first information processing apparatus or the second information processing apparatus and respectively correspond to a plurality of user terminals;
calculate a ratio of the second traffic amount to the first traffic amount for each of the plurality of virtual machines; and
determine one or more virtual machines to be operated in the second information processing apparatus by comparing ratios calculated for the plurality of virtual machines.

**5.** The information processing apparatus according to claim 4, wherein
the processor is further configured to:

define a boundary line that divides a plane of a coordinate system having a first axis that indicates the first traffic amount and a second axis that indicates the second traffic amount, into a first area where the ratio is less than a predetermined value and a second area where the ratio is equal to or larger than the predetermined value;
set a point corresponding to a pair of the first traffic amount and the second traffic amount, on the plane, for each of candidate virtual machines having the ratio less than the predetermined value; and
determine one or more virtual machines to be operated in the second information processing apparatus, among the candidate virtual machine, based on a distance between the set point and the boundary line.

**6.** The information processing apparatus according to claim 4, wherein
the processor is further configured to:

determine a priority order of operation in the second information processing apparatus, for each of the plurality of virtual machines, based on the ratio;
determine that a predetermined number of virtual machines from top in the priority order, among the plurality of virtual machines, are to be operated in the second information processing apparatus; and
determine that the rest of the plurality of virtual machines are to be operated in the first information processing apparatus.

**7.** An information processing method, comprising:

acquiring a first traffic amount of communication performed between a user terminal and a virtual machine that operates in a first information processing apparatus or a second information processing apparatus and executes a processing according to an operation from the user terminal to respond with a result, the second information processing apparatus being accessible from the user terminal in a shorter response time than the first information processing apparatus;
acquiring a second traffic amount of communication performed between the virtual machine and a storage; and
determining whether to cause the virtual machine to operate in the first information processing apparatus or the second information processing apparatus based on the first traffic amount and the second traffic amount.

**8.** A program that causes a computer to execute a process comprising:

acquiring a first traffic amount of communication performed between a user terminal and a virtual machine that operates in a first information processing apparatus or a second information processing apparatus and executes a processing according to an operation from the user terminal to respond with a result, the second information processing apparatus being accessible from the user terminal in a shorter response time than the first information processing apparatus;
acquiring a second traffic amount of communication performed between the virtual machine and a storage; and
determining whether to cause the virtual machine to operate in the first information processing apparatus or the second information processing apparatus based on the first traffic amount and the second traffic amount.

# FIG. 1

# FIG. 2

# FIG. 3

100 ORCHESTRATOR

101 PROCESSOR

104 GRAPHICS PROCESSING DEVICE

102 MEMORY

105 INPUT INTERFACE

103 STORAGE DEVICE

106 OPTICAL DRIVE DEVICE

107 DEVICE CONNECTION INTERFACE

109

108 NETWORK INTERFACE

108a NETWORK INTERFACE

41

42

43

44

45

46

47

60 NETWORK

70 NETWORK

EP 3 764 227 A1

# FIG. 4

APPLICATION
(APP#0) — 52

VM
(VM#0) — 51

OPERATION
TRANSACTION

DATA
TRANSACTION

40-1

22

|  | OPERATION TRANSACTION VOLUME | | DATA TRANSACTION VOLUME |  |
|---|---|---|---|---|
| A | 1 | : | 0.25 | ⟹ EDGE PRIORITY |
| B | 1 | : | 3 | ⟹ PUBLIC PRIORITY |

OPERATION TRANSACTION
VOLUME
(NUMBER OF PACKETS/SEC)

81

80

EDGE
PRIORITY AREA 82

83

A

B

PUBLIC PRIORITY
AREA

DATA TRANSACTION
VOLUME
(NUMBER OF PACKETS/SEC)

24

FIG. 5

MONITORING SERVER — 200

VM INFORMATION STORAGE UNIT — 210

TRAFFIC MONITORING UNIT — 220

COMMUNICATION UNIT — 230

VDI SERVER — 300

APPLICATION (APP#0) — 330

VM(VM#0) — 320

VIRTUAL NIC — 321

HYPERVISOR — 310

MIGRATION UNIT — 311

VIRTUAL NIC — 312

VIRTUAL BRIDGE — 340

ORCHESTRATOR — 100

COMMUNICATION UNIT — 110

VM INFORMATION STORAGE UNIT — 120

VM INFORMATION — 121

VM ARRANGEMENT DETERMINATION UNIT — 130

MIGRATION INSTRUCTOR — 140

STORAGE SERVER — 22

40-1

NETWORK — 50

400

500

# FIG. 6

200

300

100

STORAGE SERVER
22

40-1

NETWORK
50

400 MONITORING SERVER

430
COMMUNICATION UNIT

420
TRAFFIC MONITORING UNIT

410
VM INFORMATION STORAGE UNIT

500 VDI SERVER

530
APPLICATION (APP#0)

520
VM(VM#0)

521
VIRTUAL NIC

510
HYPERVISOR

511
MIGRATION UNIT

512
VIRTUAL NIC

540
VIRTUAL BRIDGE

FIG. 7

121

| ID | HOST NAME | VM IP ADDRESS | VM ARRANGEMENT SITE | CLIENT IP ADDRESS | STORAGE IP ADDRESS | OPERATION TRANSACTION VOLUME | DATA TRANSACTION VOLUME |
|---|---|---|---|---|---|---|---|
| 1 | VM#0 | 193.168.1.10 | PUBLIC | 193.168.1.110 | 193.168.1.251 | 10 PACKETS/SEC | 50 PACKETS/SEC |
| 2 | VM#1 | 193.168.2.20 | EDGE 1 | 193.168.2.120 | 193.168.1.251 | 30 PACKETS/SEC | 10 PACKETS/SEC |
| 3 | VM#2 | 193.168.3.30 | EDGE 2 | 193.168.3.130 | 193.168.1.251 | 50 PACKETS/SEC | 30 PACKETS/SEC |
| ⋮ | ⋮ | ⋮ | ⋮ | ⋮ | ⋮ | ⋮ | ⋮ |

## FIG. 8

321 VIRTUAL NIC ← CAPTURING PACKETS ← 220 TRAFFIC MONITORING UNIT

PACKET 90-1 90-2 90-3 ⋰

| VERSION (4) | HEADER LENGTH (4) | SERVICE TYPE (8) | PACKET LENGTH (16) | |
|---|---|---|---|---|
| IDENTIFIER (16) | | | FLAG (3) | FRAGMENT OFFSET (13) |
| TTL(8) | | PROTOCOL NUMBER (8) | HEADER CHECKSUM (16) | |
| TRANSMISSION SOURCE IP ADDRESS(32) | | | | |
| TRANSMISSION DESTINATION IP ADDRESS (32) | | | | |
| TCP HEADER | | | | |
| DATA | | | | |

91
91-1
91-2
92
93

## FIG. 9

| USER TERMINAL 40-1 | STORAGE SERVER 22 | VDI SERVER 300 | MONITORING SERVER 200 | ORCHESTRATOR 100 |
|---|---|---|---|---|

S11 ACTIVATE VM

S12 CONNECT

S13 REQUEST FOR APP ACTIVATION

S14 ACTIVATE APP

S15 START MONITORING

S16 OPERATE APP

S17 STORAGE ACCESS

S18 TRANSMIT SCREEN

S19 OPERATE APP

S20 TRANSMIT SCREEN

S21 OPERATE APP

S22 STORAGE ACCESS

S23 STORAGE ACCESS

S24 TRANSMIT SCREEN

S25 MONITORING RESULT NOTIFICATION

S26 DETERMINE ARRANGEMENT SITE

# FIG. 10

```
       ╭─────────────────────╮
       │  ARRANGEMENT SITE   │
       │   DETERMINATION     │
       ╰─────────────────────╯
                 │
                 ▼
   ┌─────────────────────────────┐  S101
   │ ACQUIRE RTT BETWEEN USER    │
   │ TERMINAL AND EACH SITE      │
   └─────────────────────────────┘
                 │
                 ▼
   ┌─────────────────────────────┐  S102
   │ DETERMINE CLOSEST EDGE SITE │
   └─────────────────────────────┘
                 │
                 ▼
          ╱───────────────╲  S103
         ╱ OPERATION VOLUME ╲      NO
         ╲  >DATA VOLUME    ╱──────────────┐
          ╲───────────────╱               │
                 │ YES  S104              │
                 ▼                         ▼
   ┌──────────────────────────┐   ┌──────────────────────────────┐
   │ DETERMINE EDGE SITE AS   │   │ DETERMINE PUBLIC SITE AS     │
   │ DESTINATION         S104 │   │ DESTINATION           S105   │
   └──────────────────────────┘   └──────────────────────────────┘
                 │                         │
                 ◄─────────────────────────┘
                 ▼
          ╱───────────────╲  S106
         ╱  CURRENT SITE   ╲
        ╱  OF VM IS SAME AS ╲     YES
        ╲   DESTINATION?    ╱──────────────┐
         ╲───────────────╱                │
                 │ NO  S107               │
                 ▼                         │
   ┌──────────────────────────┐           │
   │   CARRY OUT MIGRATION     │          │
   └──────────────────────────┘           │
                 │                         │
                 ◄─────────────────────────┘
                 ▼
            ╭─────────╮
            │   END   │
            ╰─────────╯
```

FIG. 11

EDGE SITE 30-1                                    PUBLIC SITE 20

40-1
USER
TERMINAL

500
VDI SERVER

300
VDI SERVER

100
ORCHESTRATOR

S31
MIGRATION
INSTRUCTION

S32
MIGRATION

S33
ACTIVATE VM

S34
MIGRATION
COMPLETION
NOTIFICATION

S35
CONNECTION
INSTRUCTION

S36
CONNECT

31

# FIG. 12

(1) OPERATION TRANSACTION VOLUME>DATA TRANSACTION VOLUME

EDGE SITE 30-1

PUBLIC SITE 20

VDI SERVER — 500

40-1

APPLICATION (APP#0) — 530

— 520

VM (VM#0)

OPERATION

DATA

22

(2) OPERATION TRANSACTION VOLUME ≦ DATA TRANSACTION VOLUME

EDGE SITE 30-1

PUBLIC SITE 20

VDI SERVER — 300

40-1

APPLICATION (APP#0) — 330

— 320

VM (VM#0)

OPERATION

DATA

22

# FIG. 13

# FIG. 14

## FIG. 15

# FIG. 16

122

| ID | SITE NAME | VM ARRANGEMENT UPPER LIMIT | ARRANGEMENT CANDIDATE VM |
|---|---|---|---|
| 1 | EDGE 1 | 3 | VM#1,VM#2,VM#3,VM#4,VM#5 |
| 2 | EDGE 2 | 4 | VM#6,VM#7 |
| 3 | EDGE 3 | 3 | VM#8,VM#9,VM#10 |
| ⋮ | ⋮ | ⋮ | ⋮ |

# FIG. 17

| PRIORITY | SITE |
|----------|------|
| 1 | $A(R_A = 5)$ |
| 2 | $C(R_C = 3)$ |
| 3 | $D(R_D = 1)$ |
| 4 | $E(R_E = -2)$ |
| 5 | $B(R_B = -4)$ |

ARRANGE ON EDGE SITE
(WHEN NOT ALL ARE ARRANGED,
ARRANGE ON PUBLIC SITE)

ARRANGE ON PUBLIC SITE

# FIG. 18

```
        ┌─────────────────────────┐
        │  ARRANGEMENT SITE       │
        │  DETERMINATION          │
        └─────────────────────────┘
                    │
                    ▼
        ┌─────────────────────────┐   S201
        │ L= UPPER LIMIT OF NUMBER│
        │ OF VMS ON EDGE          │
        │ n= TOTAL NUMBER OF VMS  │
        └─────────────────────────┘
                    │
                    ▼
        ┌─────────────────────────┐   S202
        │ CALCULATE Rx FOR EACH VM│
        └─────────────────────────┘
                    │
                    ▼
        ┌─────────────────────────┐   S203
        │ LOOP VARIABLE k=1       │
        │ NUMBER FOR ARRANGEMENT  │
        │ ON EDGE SITE e=0        │
        └─────────────────────────┘
                    │
                    ▼
        ┌─────────────────────────┐   S204
        │ SELECT VM HAVING kTH    │
        │ LARGEST Rx              │
        └─────────────────────────┘
```

S205: $R_X > 0$ ? — YES / NO

S206: $e < L$ ? — YES / NO

S207: DETERMINE EDGE SITE AS DESTINATION NUMBER FOR ARRANGEMENT ON EDGE SITE e=e+1

S208: DETERMINE PUBLIC SITE AS DESTINATION

S209: $k = n$ ? — YES / NO

S210: $k = k + 1$

S211: CARRY OUT MIGRATION OF VM FOR WHICH CURRENT SITE IS DIFFERENT FROM DESTINATION

END

## FIG. 19

# FIG. 20

ALL OPERATING VMS

61 | 62 | 63
VM | VM | VM

ARRANGE

EDGE SITE 30-1

PUBLIC SITE 20

500

VDI SERVER

300

VDI SERVER

ARRANGEMENT UPPER LIMIT : 3

ADD VM

ADDED VMS

64 | 65
VM | VM

EDGE SITE 30-1

PUBLIC SITE 20

500

VDI SERVER

300

VDI SERVER

61 | 62 | 63
VM | VM | VM

ARRANGEMENT UPPER LIMIT : 3

RE-ARRANGE

# FIG. 21

```
        ( ARRANGEMENT SITE )
        (  DETERMINATION   )
                 │
                 ▼
    ┌─────────────────────────────────┐  S301
    │ L= UPPER LIMIT OF NUMBER OF VMS ON EDGE │
    │        n= TOTAL NUMBER OF VMS          │
    └─────────────────────────────────┘
                 │
                 ▼
    ┌─────────────────────────────────┐  S302
    │     CALCULATE Rx FOR EACH VM     │
    └─────────────────────────────────┘
                 │
                 ▼
```

S303

$L \geqq n$ ?   —— YES ——

S304
DETERMINE EDGE SITE AS
DESTINATION OF ALL VMS

NO

S305
LOOP VARIABLE k=1
NUMBER FOR ARRANGEMENT ON EDGE SITE e=0

S306
SELECT VM HAVING K$^{TH}$ LARGEST R$_X$

S307
$e < L$ ?   —— NO ——

S309
DETERMINE PUBLIC SITE AS
DESTINATION

YES

S308
DETERMINE EDGE SITE AS
DESTINATION, NUMBER FOR
ARRANGEMENT ON EDGE SITE e=e+1

S310
$k = n$ ?   —— NO ——

S311
k = k + 1

YES

S312
CARRY OUT MIGRATION OF VM FOR
WHICH CURRENT SITE IS DIFFERENT
FROM DESTINATION

( END )

# FIG. 22

EDGE SITE 30-1

PUBLIC SITE 20

22

500

VDI SERVER

300

VDI SERVER

40-21

OPETARE

530-11

APP(APP#11)

520-11

VM(VM#11)

DATA

40-22

OPERATE

530-12

APP(APP#12)

520-12

VM(VM#12)

DATA

40-23

OPERATE

530-13

APP(APP#13)

520-13

VM(VM#13)

DATA

STORAGE SERVER

# FIG. 23

EDGE SITE 30-1

PUBLIC SITE 20

22

VDI SERVER 500

530-11
APP(APP#11) 520-11
VM(VM#11)

530-12
APP(APP#12) 520-12
VM(VM#12)

530-14
APP(APP#14) 520-14
VM(VM#14)

VDI SERVER 300

STORAGE SERVER

40-21 OPERATE
40-22 OPERATE
40-24 OPERATE
40-23 OPERATE

DATA
DATA
DATA

330-11
APP(APP#13) 320-11
VM(VM#13)
DATA

# FIG. 24

EDGE SITE 30-1

PUBLIC SITE 20

40-21

OPERATE

VDI SERVER 500

530-11
APP(APP#11) 520-11

VM(VM#11)

DATA

VDI SERVER 300

22

STORAGE SERVER

40-22

OPERATE

530-12
APP(APP#12) 520-12

VM(VM#12)

DATA

40-23

OPERATE

530-13
APP(APP#13) 520-13

VM(VM#13)

DATA

40-25

OPERATE

330-12
APP(APP#15) 320-12

VM(VM#15)

DATA

Europäisches
Patentamt

European
Patent Office

Office européen
des brevets

**EUROPEAN SEARCH REPORT**

Application Number

EP 20 18 1178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/143426 A1 (YAMASHITA SHINJI [JP]) 22 May 2014 (2014-05-22) * claims 1-10 * * paragraph [0031] - paragraph [0140] * * figures 1-10 * | 1-8 | INV. G06F9/455 G06F9/451 G06F9/50 |
| A | JP 2018 147344 A (NEC CORP) 20 September 2018 (2018-09-20) * the whole document * | 1-8 | |
| A | US 2019/138350 A1 (KANEKO TAKUMA [JP] ET AL) 9 May 2019 (2019-05-09) * claims 1-2 * | 6 | |

TECHNICAL FIELDS
SEARCHED (IPC)

G06F

The present search report has been drawn up for all claims

| Place of search | Date of completion of the search | Examiner |
|---|---|---|
| Munich | 23 November 2020 | Rackl, Günther |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 18 1178

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2020

| Patent document cited in search report | | Publication date | Patent family member(s) | | Publication date |
|---|---|---|---|---|---|
| US 2014143426 | A1 | 22-05-2014 | JP | 5958301 B2 | 27-07-2016 |
| | | | JP | 2014102740 A | 05-06-2014 |
| | | | US | 2014143426 A1 | 22-05-2014 |
| JP 2018147344 | A | 20-09-2018 | JP | 6627808 B2 | 08-01-2020 |
| | | | JP | 2018147344 A | 20-09-2018 |
| US 2019138350 | A1 | 09-05-2019 | JP | 2019087033 A | 06-06-2019 |
| | | | US | 2019138350 A1 | 09-05-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013196538 A
- JP 2017143365 A